# EUROPEAN PATENT SPECIFICATION

(11) **EP 4 570 022 B1**
(45) Date of publication and mention of the grant of the patent: **04.11.2026**
(21) Application number: 23758723.3
(22) Date of filing: 08.08.2023
(51) Int. Cl.: H04W 76/19, H04W 76/18, H04W 76/15

(54) **METHODS AND APPARATUSES FOR ADDRESSING RADIO LINK FAILURE REPORTS**
VERFAHREN UND GERÄTE ZUR BEHANDLUNG VON FUNKSTRECKENAUSFALLMELDUNGEN
PROCÉDÉS ET DISPOSITIFS POUR TRAITER LES RAPPORTS DE DÉFAILLANCE DE LIAISON RADIO

(30) Priority: 08.08.2022 US 202263396005 P
(43) Date of publication of application: 18.06.2025
(73) Proprietor: Telefonaktiebolaget LM Ericsson (publ), 164 83 Stockholm (SE)
(72) Inventor: TORABIAN ESFAHANI, Tahmineh, 192 51 Sollentuna (SE); RAMACHANDRA, Pradeepa, 589 29 Linköping (SE); PARICHEHREHTEROUJENI, Ali, 583 34 Linköping (SE); BELLESCHI, Marco, 171 55 Solna (SE); BERGQVIST, Jens, 587 37 Linköping (SE)
(74) Representative: Ericsson
(86) International application number: PCT/IB2023/058021
(87) International publication number: WO 2024/033818

(56) References cited:
- WO-A1-2020/221196
- WO-A1-2022/077183
- ZTE CORPORATION ET AL: "Immediate MDT enhancements", vol. RAN WG2, no. Electronic meeting; 20211101 - 20211112, 22 October 2021 (2021-10-22), XP052067182, Retrieved from the Internet <URL:https://ftp.3gpp.org/tsg_ran/WG2_RL2/TSGR2_116-e/Docs/R2-2110739.zip R2-2110739 Consideration Immediate MDT enhancements.doc> [retrieved on 20211022]

## Description

### TECHNICAL FIELD

The present disclosure relates to wireless communications, and in particular, to addressing secondary cell group (SCG) status in radio link failure (RLF) reports.

### BACKGROUND

The Third Generation Partnership Project (3GPP) has developed and is developing standards for Fourth Generation (4G) (also referred to as Long Term Evolution (LTE)) and Fifth Generation (5G) (also referred to as New Radio (NR)) wireless communication systems. Such systems provide, among other features, broadband communication between network nodes (NNs), such as base stations, and mobile wireless devices (WDs)(e.g., user equipment (UE)), as well as communication between network nodes and between wireless devices. Sixth Generation (6G) wireless communication systems are also under development.

### Dual Connectivity

Multi-Radio Dual Connectivity (MR-DC) describes a scenario where a wireless device that is capable of connecting to multiple network nodes (e.g., access nodes such as radio access nodes (RAN) nodes) utilizes multiple resources to increase throughput, for example, as described in 3GPP technical specification (TS) 37.340 V17.1.0. This is a generalization of the intra evolved universal mobile telecommunications system (UMTS) terrestrial radio access network (intra-E-UTRA) DC, for example, described in 3GPP TS 36.300 V17.1.0.

When a wireless device is in DC mode, one network node (access node/RAN node) acts as the master node (MN) and the other network node (access node/RAN node) acts as a secondary node (SN). The MN and SN are connected via a network interface, and at least the MN is connected to the core network. Details on example configurations of MR-DC can be found, e.g., in 3GPP TS 38.401 V17.1.1. The primary cell in MN is known as PCell and the primary cell in SN is known as PSCell.

### Fast MCG recovery

Fast master cell group (MCG) Recovery has been standardized in previous 3GPP releases. The purpose of this feature is to use DC to improve robustness for the wireless device. For example, the following procedure may be performed:
- The wireless device is performing in DC, served by a Master Cell Group (MCG - from MN) and a Secondary Cell Group (SCG - from SN).
- In case of Radio Link Failure (RLF - e.g., coverage hole, caused by a network condition, etc.) declared in the MCG, and if the wireless device is still in coverage of the SCG, the wireless device may send an MCG Failure to the node hosting SCG (i.e. the SN).
- The SN forwards the MCG Failure message to the MN.
- The MN takes action to lower WD interruption time (e.g., performs a handoff (HO)).

### SCG activation/deactivation

SCG activation/deactivation is a 3GPP feature for allowing the SCG to be deactivated, while being configured, to, e.g., reduce battery consumption in the wireless device. The MN or the SN can then make the decision to activate/deactivate the SCG leg at any time. If the SCG is deactivated, only the MCG leg can be used by the wireless device.

### SCG Failure reporting

In some conventional 3GPP systems, while configured with MR-DC, a wireless device may be configured to monitor the PSCell and a so-called SCG RLF (S-RLF) may be detected. When that happens, an SCG failure report may be transmitted via MCG. An example SCG Failure Information procedure is provided in Section 5.7.3 of 3GPP technical document TS 38.331V17.1.0, which describes the following:

### "5.7.3 SCG failure information

### 5.7.3.1 General

The purpose of this procedure is to inform E-UTRAN or NR MN about an SCG failure the UE has experienced i.e. SCG radio link failure, failure of SCG reconfiguration with sync, SCG configuration failure for RRC message on SRB3, SCG integrity check failure, and consistent uplink LBT failures on PSCell for operation with shared spectrum channel access.

### 5.7.3.2 Initiation

A UE initiates the procedure to report SCG failures when neither MCG nor SCG transmission is suspended and when one of the following conditions is met:
1> upon detecting radio link failure for the SCG, in accordance with subclause 5.3.10.3;
1> upon reconfiguration with sync failure of the SCG, in accordance with subclause 5.3.5.8.3;
1> upon SCG configuration failure, in accordance with subclause 5.3.5.8.2;
1> upon integrity check failure indication from SCG lower layers concerning SRB3.

Upon initiating the procedure, the UE shall:
1> suspend SCG transmission for all SRBs and DRBs;
1> reset SCG MAC;
1> stop T304 for the SCG, if running;
1> stop conditional reconfiguration evaluation for CPC, if configured;
1> if the UE is in (NG)EN-DC:
   2> initiate transmission of the SCGFailureInformationNR message as specified in TS 36.331 [10], clause 5.6.13a.
   1> else:
      2> initiate transmission of the SCGFailureInformation message in accordance with 5.7.3.5."

The content of the SCG Failure report may contain a failure type, MCG related measurements, and SCG related measurements. The SCG related measurements are included in SN format, in a container, and the setting of the information may be defined, e.g., in 3GPP TS 38.331 V17.1.0, clause 5.7.3.

### SCG failure forwarding from SN to MN in CG-ConfigInfo

Upon reception of the MCG measurements, the MN can determine the actions to be performed, e.g., release the SN, change the SN, etc.

However, the SCG measurements may be useful for other procedures. Hence, SCG measurements that have been received at the MN within an SCG Failure report (within SCGFailureInformation message) can be forwarded, e.g., when the MN releases and/or modifies the wireless device context (i.e., UE context information) at the SN within the RRC container CG-ConfigInfo, for example, as defined in 3GPP TS 38.331 V17.1.0, when the master node (e.g., master eNB or gNB) requests the secondary node (e.g., SgNB or SeNB) to perform certain actions, e.g., to establish, modify or release an SCG.

In one example, according to the field description for the RRC container CG-ConfigInfo, scgFailureInfo contains SCG failure type and measurement results. In case the sender has no measurement results available, the sender may include one empty entry (e.g., without any optional fields present) in measResultPerMOList. This field may be used in (NG)EN-DC and NR-DC. Furthermore, scgFailureInfoEUTRA may contain SCG failure type and measurement results of the E-UTRAN secondary cell group. This field may be used in NR E-UTRA Dual Connectivity (NE-DC) configurations.

According to 3GPP TS 38.423, for example, in Multi-Radio Dual Connectivity (MR-DC) cases connected to 5GC, the RRC container CG-ConfigInfo may be included in the following messages from MN to SN:
S-NODE ADDITION REQUEST;
S-NODE RECONFIGURATION COMPLETE;
S-NODE MODIFICATION REQUEST;
S-NODE MODIFICATION REFUSE; and
S-NODE RELEASE REQUEST.

However, in the case where the MN receives an SCG Failure report for the wireless device, and where a wireless device context is still established in the SN, the MN may typically send a S-NODE MODIFICATION REQUEST or a S-NODE RELEASE REQUEST, e.g., to modify or release the SN.

### RLF reporting

Even while configured with Multi-Radio Dual Connectivity (MR-DC) a wireless device still monitors the primary cell (PCell) and a so-called MCG RLF (M-RLF) can be detected. When that happens, either an MCG failure report is transmitted via the SCG, or a re-establishment procedure is triggered.

Below is an example 3GPP standard procedure from TS 38.331 V17.1.0, which recites as follows:

### "5.3.10.3 Detection of radio link failure

The UE shall:
1> if any DAPS bearer is configured:
   . . .
1> else:
   2> upon T310 expiry in PCell; or
   2> upon T312 expiry in PCell; or
   2> upon random access problem indication from MCG MAC while neither T300, T301, T304, T311 nor T319 are running; or
   2> upon indication from MCG RLC that the maximum number of retransmissions has been reached; or
   2> if connected as an IAB-node, upon BH RLF indication received on BAP entity from the MCG; or
   2> upon consistent uplink LBT failure indication from MCG MAC while T304 is not running:
      3> if the indication is from MCG RLC and CA duplication is configured and activated, and for the corresponding logical channel allowedServingCells only includes SCell(s):
         4> initiate the failure information procedure as specified in 5.7.5 to report RLC failure.
         3> else:
            4> consider radio link failure to be detected for the MCG i.e. RLF;
            4> discard any segments of segmented RRC messages stored according to 5.7.6.3;
            4> store the following radio link failure information in the VarRLF-Report by setting its fields as follows:
               // setting the content of RLF report . . .
            4> if AS security has not been activated:
               5> perform the actions upon going to RRC_IDLE as specified in 5.3.11, with release cause 'other';-
            4> else if AS security has been activated but SRB2 and at least one DRB or, for IAB, SRB2, have not been setup:
               5> store the radio link failure information in the VarRLF-Report as described in subclause 5.3.10.5;
               5> perform the actions upon going to RRC_IDLE as specified in 5.3.11, with release cause 'RRC connection failure';
            4> else:
               5> store the radio link failure information in the VarRLF-Report as described in subclause 5.3.10.5;
               5> if T316 is configured; and
               5> if SCG transmission is not suspended; and
               5> if PSCell change is not ongoing (i.e. timer T304 for the NR PSCell is not running in case of NR-DC or timer T307 of the E-UTRA PSCell is not running as specified in TS 36.331 [10], clause 5.3.10.10, in NE-DC):
                  6> initiate the MCG failure information procedure as specified in 5.7.3b to report MCG radio link failure.
                  5> else:
                     6> initiate the connection re-establishment procedure as specified in 5.3.7.

The UE may discard the radio link failure information, i.e. release the UE variable VarRLF-Report, 48 hours after the radio link failure is detected."

According to the above procedure, if fast MCG link recovery is configured, e.g., a timer, such as T316, is configured, the wireless device, upon experiencing an MCG RLF, may attempt to recover its connection by sending an MCGFailureInformation via the SCG. Upon reception of the MCG Failure Information, the network node may configure a new MCG, so that the wireless device does not need to perform any reestablishment procedure which may impact wireless device performances. Before transmitting the MCG Failure Information, the wireless device needs to determine whether the SCG is available. The SCG may have been, for example, deactivated by the network, e.g., for energy saving purposes the network may have transmitted an RRCReconfiguration message including scg-State set to deactivated for the SCG, so that the wireless device can stop performing radio link monitoring and beam failure detection on the SCG, without releasing the entire SCG configuration. As another example, the SCG operations might have been suspended by the wireless device as a consequence of an RLF experienced in the SCG.

### RLF report forwarding from Re-establishment node to Source node

If an MCG failure report is transmitted, the SN can send an RRC transfer message to the MN, so the MN can take the appropriate actions. If, instead, re-establishment is triggered, the wireless device includes an indication that an RLF report is available in the RRCReestablishmentComplete message so the node where the wireless device has Re-established can retrieve the RLF report via UE Information request. Then, the RLF report can be included in an UEInformationResponse.

Once that message is received, the Re-establishment node can retrieve in the RLF report the information regarding the cell where the wireless device has failed, so that it can forward the RLF report to the source node.

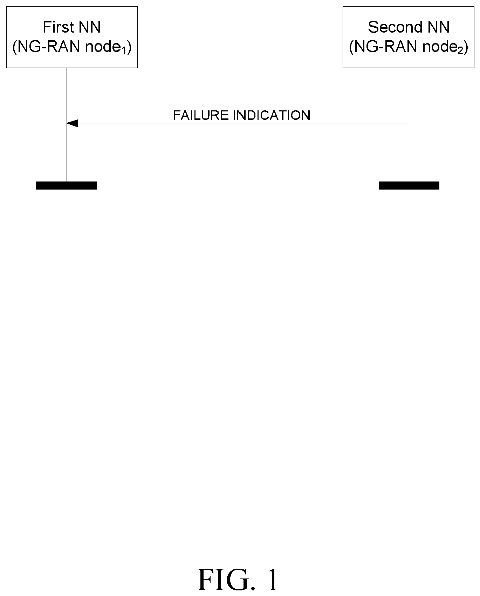

FIG. 1 depicts an example Failure Indication procedure which may be used for that purpose, for example as defined in 3GPP TS 38.423 (see Clause 8.4.7). The procedure may be for transferring information regarding RRC re-establishment attempts, or received RLF Reports, between network nodes (e.g., NG-RAN nodes). The signaling takes place from the NG-RAN node at which a re-establishment attempt is made, or an RLF Report is received, to an NG-RAN node to which the wireless device concerned may have previously been attached prior to the connection failure. This may aid the detection of radio link failure, handover failure cases. The procedure may use non wireless device-associated signaling.

Referring still to FIG. 1, the first network node (e.g., NG-RAN node2) initiates the procedure by sending the FAILURE INDICATION message to the first network node (e.g., NG-RAN node1), following a re-establishment attempt or an RLF Report reception from a wireless device at the second network node (e.g., NG-RAN node2), when the second network node (e.g., NG-RAN node2) considers that the wireless device may have previously suffered a connection failure at a cell controlled by NG-RAN node1. If the wireless device RLF Report Container information element (IE) is included in the FAILURE INDICATION message, the first network node (e.g., NG-RAN node1),may use it to derive failure case information.

The following is an example failure indication description:

### FAILURE INDICATION

**Table 1. - Failure Indication.**

| **IE/Group Name** | | **Presence** | **Range** | **IE type and reference** | **Semantics description** | **Criticality** | **Assigned Criticality** |
|---|---|---|---|---|---|---|---|
| Message Type | | M | | 9.2.3.1 | | YES | ignore |
| . . . | | . . . | | | | . . . | . . . |
| | >>UE RLF Report Container | O | | 9.2.2.59 | *nr-RLF-Report-r*16 IE contained in the *UEInformat ionResponse* message (TS 38.331) or *RLF-Report-r9* IE contained in the *UEInformat ionResponse* message (TS 36.331) | | |

**Table 2. - Condition and explanation.**

| **Condition** | **Explanation** |
|---|---|
| ifUERLFReportContainerAbsent | This IE may be present if the UE RLF Report Container IE is absent |

In NR or EUTRA DC operation, a wireless device detecting loss of downlink synchronization (e.g., a physical layer problem), maximum Random-Access (RA) attempts (random access problem), etc., may declare failure and suspend the failed link. In addition, the wireless device may log the failure and send an RRC message, i.e., the wireless device sends MCGFailureInformation to the SN for failure associated to master cell group (MCG) as an indicator of the MCG related link failure issues, if configured for fast MCG link recovery. Such a message may include information like location information, latest available RRM measurements of the MN and SN configured measurements, etc. This may also apply when SCGFailureInformation procedure is initiated, i.e., the wireless device sends SCGFailureInformation to the MN for failure associated to secondary cell group (SCG) as an indicator of the SCG related link failure issues.

When a wireless device declares SCG failure, if the MN becomes suspended or deactivated upon reception of RRCReconfiguration at the time of failure, then the wireless device cannot send the SCGFailureInformation to the MN, e.g., when T304 of SCG expires while MCG transmission gets suspended. Hence information associated with the SCG failure may be lost.

Similarly, when the wireless device declares the MCG failure, if the SN is deactivated by the network or suspended, then the wireless device cannot send the MCGFailureInformation to the SN and failure-related information associated to both SCG and MCG are not reported to the network, e.g., via the network node, and the network may not be able to determine why the wireless device could not transmit the MCGFailureInformation.

Thus, existing systems may lack adequate failure reporting procedures.

Document WO 2022/077183 A1 discloses methods and apparatuses for a mobility robustness optimization (MRO) mechanism for a fast master cell group (MCG) link recovery procedure and an unbalanced uplink (UL) and downlink (DL) coverage scenario under a 3GPP 5G New Radio (NR) system, or the like. A method can include: receiving configuration information regarding a fast master cell group (MCG) link recovery procedure for a user equipment (UE); in response to an occurrence of a radio link failure (RLF) on a MCG, performing the fast MCG link recovery procedure and starting a timer associated with fast MCG link recovery; storing information associated with the fast MCG link recovery procedure in response to successfully completing the fast MCG link recovery procedure or in response to failing to complete the fast MCG link recovery procedure; and in response to the UE accessing a base station (BS), reporting the stored information to the BS. In addition, a UE may report assistant information (e.g., transmitting power) to a BS. The BS may identify whether there is a problem in an uplink using the assistant information.

Document WO 2020/221196 A1 discloses a user equipment (UE) control method and user equipment. The user equipment (UE) control method comprises: the UE performing an MCG failure recovery operation; upon detection of the failure of the MCG failure recovery operation, triggering an RRC connection reestablishment process of sending an RRC connection reestablishment request message to a base station; and configuring a reestablishment cause in the RRC connection reestablishment request message according to the failure of the MCG failure recovery operation.

Document "Immediate MDT enhancements", ZTE Corporation et al., 3GPP draft, R2-2110739, discloses an evaluation of R17 immediate MDT enhancements for fast MCG recovery case. The following observations and proposals were made. Observation 1: MCG failure information is transferred by SN to MN during fast MCG recovery procedure to inform MN the failure related information, e.g., failure type, available measurements to help MN obtaining the detailed failure information and determining whether to release the UE or HO UE to another cell. Observation 2: It is beneficial to include location information in MCG failure information for MN to locates the place where the coverage fails. Observation 3: UE will delete the RLF report stored when response from MN (transferred by SN) is received during running of T316 while for the other case, i.e., T316 expiry and SCG fails during fast MCG recovery, UE will keep the RLF report stored. Observation 4: Based on current RLF report stored NW cannot know if the MCG failure is fast MCG recovery failure or not. It is useful for NW to identify fast MCG recovery failure so that it can optimize the fast MCG recovery configuration, e.g., T316. Observation 5: Different behavior could be adopted from NW's side for fast MCG recovery fails caused due to different reasons, e.g., T316 expiry, or both SCG and MCG fails. Proposal 1: It is proposed to include location information in MCG failure information. Proposal 2: To add fast MCG recovery failure as connectionFailureType in RLF report when radio link is detected in MN and fast MCG recovery fails. Proposal 3: For RLF-report with connectionFailureType as fast MCG recovery failure, indication for failure cause is included to indicate whether the fast MCG recovery failure is due to T316 expiry or both MCG and SCG fails.

### SUMMARY

Some embodiments advantageously provide methods, systems, and apparatuses for addressing SCG status in RLF reports.

Embodiments of the present disclosure may refer to a "fast MCG link recovery configured" wherein the WD may initiate an MCG failure information procedure upon detecting the MCG RLF, e.g., a timer associated with fast MCG link recovery, such as T316 timer, is configured for the WD.

According to the present disclosure, there are provided, methods, a wireless device, a network node and a computer-readable medium according to the independent claims. Developments are set forth in the dependent claims.

According to a first aspect of the present disclosure, there is provided a method in a wireless device, WD, configured to communicate with a network node, the WD being configured with a dual connectivity, DC, configuration including one or more parameters usable by the WD to communicate using a master cell group, MCG, and a secondary cell group, SCG, the WD being configurable with a fast MCG link recovery configuration. The method comprises determining a failure of the MCG has occurred; determining a failure of an MCG recovery procedure has occurred; in response to determining the failure of the MCG recovery procedure has occurred: storing information related to a reason for the failure of the MCG recovery procedure, the reason including an indication that the SCG is deactivated; and transmitting the stored information to the network node.

According to a second aspect of the present disclosure, there is provided a wireless device, WD, configured to communicate with a network node, the WD being configured with a dual connectivity, DC, configuration including one or more parameters usable by the WD to communicate using a master cell group, MCG, and a secondary cell group, SCG, the WD being configurable with a fast MCG link recovery configuration, the WD being configured to perform the method according to the first aspect.

According to a third aspect of the present disclosure, there is provided a method in a network node configured to communicate with a wireless device, WD, the WD being configured with a dual connectivity, DC, configuration including one or more parameters usable by the WD to communicate using a master cell group, MCG, and a secondary cell group, SCG, the WD being configurable with a fast MCG link recovery configuration. The method comprises receiving, from the WD, information related to a reason for a failure of an MCG recovery procedure, the reason including an indication that the SCG is deactivated, the MCG recovery procedure being associated with a failure of the MCG; and performing one or more actions based on the information.

According to a fourth aspect of the present disclosure, there is provided a network node configured to communicate with a wireless device, WD, the WD being configured with a dual connectivity, DC, configuration including one or more parameters usable by the WD to communicate using a master cell group, MCG, and a secondary cell group, SCG, the WD being configurable with a fast MCG link recovery configuration, the network node being configured to perform the method according to the third aspect.

According to a fifth aspect of the present disclosure, there is provided a computer-readable medium comprising code portions which: when executed on a processor of a network node, configure the processor to perform the method according to the first aspect; or when executed on a processor of a wireless device, configure the processor to perform the method according to any one of the third aspect.

Whenever in the following disclosure any feature of the aspects (independent claims) just referenced is disclosed as "optional" (e.g. due to usage of conjunctive terms, such as "can", "may", "should" etc.), it is nevertheless to be read as "mandatory".

For example, the first message and related first set of information may be the MCGFailureInformation message.

For example, the second message may be an RLF-Report including information associated to the MCG RLF and/or to the SCG RLF.

For example, the third set of information may be the information to be included in the SCGFailureInformation message.

For example of the present disclosure, a method performed by a wireless device is provided. For example, the method includes detecting a failure on an MCG. For example, if fast MCG link recovery is configured, e.g., a timer associated with fast MCG link recovery, such as T316 timer, is configured, the method includes storing a first set of information in a first message, where the first set of information is associated to the detected/determined failure on the master cell group.

For example, the method further includes checking the status of a SCG, which may include one or more of the following steps:
- For example, upon detecting the secondary cell group is not deactivated/suspended, the method further includes transmitting the first message including the first set of information to a first network node and storing a second set of information in a second message associated to the detected failure on the master cell group with secondary cell group not deactivated/suspended. For example, this operation may only be performed if fast MCG link recovery is configured, i.e., a T316 timer is configured, in which case, the information that the SCG is not deactivated/suspended may imply that fast MCG link recovery is successful.
- For example, upon detecting the secondary cell group has become deactivated, the method further includes storing a second set of information in a second message, where the second set of information is associated to the detected failure on the master cell group with the secondary cell group deactivated. For example, this operation may only be performed if fast MCG link recovery is configured, e.g., if a timer such as timer T316 (and/or any other timer associated with fast MCG link recovery) is configured, in which case the information that the SCG is not activated may imply that fast MCG link recovery is not successful.
- For example, upon detecting the secondary cell group has become suspended, the method further includes storing a second set of information in a second message, where the second set of information is associated to the detected failure on the master cell group with secondary cell group suspended. For example, this operation may only be performed if fast MCG link recovery is configured, e.g., a timer such as timer T316 timer configured, in which case the information that the SCG is suspended implies that fast MCG link recovery is not successful. For example, the SCG may be suspended if the wireless device experienced an RLF in the SCG.
- For example, if fast MCG link recovery is not configured and/or if the SCG is not configured, the method further includes storing a second set of information in a second message, where the second set of information is associated to the detected failure on the master cell group with SCG not configured and/or with fast MCG link recovery not configured.
- For example, upon detecting the secondary cell group has failed, i.e., SCG RLF, (a failure is already detected at the SCG), the method further includes storing a third set of information, where the third set of information is associated to the detected failure on the SCG cell group. For example, such third set of information may be included in the second message which also included information related to the MCG RLF.

For example, the method may further include transmitting availability of the information included in the second message, where the information included in the second message may include the first set of information and/or parts of it, the second set of information, the third set of information and/or parts of it, etc.

For example, the method may further include transmitting the second message to a network node requesting it.

For example, the second set of information may include legacy information associated to the RLF experienced in the MCG, and/or one or more of the following information:
- A cell identifier of the PSCell, if configured;
- The status of the SCG at the moment of the MCG failure, where the status may be any of the following:
   ∘ SCG suspended, i.e., RLF experienced in SCG;
   ∘ SCG deactivated; and/or
   ∘ SCG not configured.
- **An indication** of whether a timer associated with fast MCG link recovery, such as timer T316, was configured at the moment of the MCG RLF, i.e., a fast MCG link recovery was configured.
- If the SCG was not active at the moment of the MCG RLF, the time elapsed between the SCG deactivation and the MCG RLF.
- If the SCG was suspended at the moment of the MCG RLF, the time elapsed between the SCG suspension and the MCG RLF.
- If the SCG was not configured at the moment of the MCG RLF or if the fast MCG link recovery timer (e.g., timer T316) was not configured at the time of the MCG RLF, the time elapsed between the SCG configuration release or timer (e.g., T316) release and the MCG RLF.
- If an RLF is experienced in the SCG, a set of information associated to the SCG RLF, in relation to the failure in the MCG such as:
   ∘ The time elapsed between experiencing the failure in the SCG and the failure in the MCG; and
   ∘ An indication indicating whether the RLF occurred first in time in the SCG or in the MCG.
- The latest radio measurements available are associated to the PSCell. For example, this information is only provided in case an RLF is experienced also in the SCG. For example, that information is provided as long as the SCG is configured at the time of the MCG RLF. In yet another embodiment, that information is provided as long as the SCG is activated at the time of the MCG RLF.

For example, there may be methods and apparatuses for the wireless device to report to the network node RLF information associated to the MCG, taking into account the status of the SCG at the time of the RLF in the MCG. For example, such RLF information may also comprise information associated with the SCG. Using this technique, the network node may optimize (e.g., modify one or more parameters to improve performance, such as by reducing the predicted/actual rate of failure) the configuration of the SCG, e.g., may determine whether/when to deactivate and/or configure the SCG, and/or whether to configure the wireless device for fast MCG link recovery, so that the impact of the RLF experienced in the MCG is minimized for the wireless device performance.

Some embodiments of the present disclosure may advantageously provide for a RAN node to be able to analyze network configuration performance for live mobility policy optimization.

For example, a wireless device (WD) configured to communicate with a network node is described. For example, the WD is configured with a dual connectivity (DC) configuration including one or more parameters usable by the WD to communicate using a master cell group (MCG) and a secondary cell group (SCG). For example, the WD is configurable with a fast MCG link recovery configuration and is configured to determine a failure of the MCG has occurred and determine a failure of an MCG recovery procedure has occurred. For example, the WD is further configured to, in response to determining the failure of the MCG recovery procedure has occurred, store information related to a reason for the failure of the MCG recovery procedure and cause transmission of the stored information to the network node.

For example, the WD is further configured to determine the failure of the MCG recovery procedure has occurred after detection of a radio link failure at the MCG.

For example, the information includes an indication indicating the reason for the failure of the MCG recovery procedure. The WD is further configured to, if a first timer (T316) has expired, set the indication to an expiry of the T316.

For example, the WD is further configured to, if the T316 has not expired and the SCG was deactivated at an initiation time of the MCG recovery procedure, set the indication to SCG deactivated.

For example, the WD is further configured to, if the SCG has failed while the T316 was running or before transmitting MCG failure information, set a primary secondary cell identity to a global cell identity of a primary secondary cell group (PSCell), if available, otherwise to a physical cell identity and carrier frequency of the PSCell.

For example, the WD is further configured to, if the SCG has failed while the T316 was running or before transmitting MCG failure information and if a second timer (T310) expires at the SCG while the T316 was running or before transmitting the MCG failure information, set the indication to expiry of the T310 at SCG.

For example, the WD is further configured to, if the WD declares a radio link failure at the SCG due to a random access problem indication from SCG Medium Access Control (MAC) while the T316 was running or before transmitting the MCG failure information, set the indication to SCG random access problem.

For example, the WD is further configured to, if the WD declares a radio link failure at the SCG due to reaching a maximum number of retransmissions from an MCG radio link control (RLC) while the T316 was running or before transmitting the MCG failure information, set the indication to SCG RLC maximum number of retries.

For example, the WD is further configured to cause transmission of a radio link failure report including a plurality of fields, where one field of the plurality of fields includes the indication.

For example, the information related to the reason for the failure of the MCG recovery procedure is transmitted by the WD in an information response message.

For example, a method in a wireless device (WD) configured to communicate with a network node is described. For example, the WD is configured with a dual connectivity (DC) configuration including one or more parameters usable by the WD to communicate using a master cell group (MCG) and a secondary cell group (SCG). For example, the WD is configurable with a fast MCG link recovery configuration. For example, the method includes determining a failure of the MCG has occurred, determining a failure of an MCG recovery procedure has occurred, and in response to determining the failure of the MCG recovery procedure has occurred, storing information related to a reason for the failure of the MCG recovery procedure, and transmitting the stored information to the network node.

For example, the method further includes determining the failure of the MCG recovery procedure has occurred after detection of a radio link failure at the MCG.

For example, the information includes an indication indicating the reason for the failure of the MCG recovery procedure. The method further includes, if a first timer (T316) has expired, setting the indication to an expiry of the T316.

For example, the method further includes, if the T316 has not expired and the SCG was deactivated at an initiation time of the MCG recovery procedure, setting the indication to SCG deactivated.

For example, the method further includes, if the SCG has failed while the T316 was running or before transmitting MCG failure information, setting a primary secondary cell identity to a global cell identity of a primary secondary cell group (PSCell) if available, otherwise to a physical cell identity and carrier frequency of the PSCell.

For example, the method further includes, if the SCG has failed while the T316 was running or before transmitting MCG failure information and if a second timer (T310) expires at the SCG while the T316 was running or before transmitting the MCG failure information, setting the indication to expiry of the T310 at SCG.

For example, the method further includes, if the WD declares a radio link failure at the SCG due to a random access problem indication from SCG Medium Access Control (MAC) while the T316 was running or before transmitting the MCG failure information, setting the indication to SCG random access problem.

For example, the method further includes, if the WD declares a radio link failure at the SCG due to reaching a maximum number of retransmissions from an MCG radio link control (RLC) while the T316 was running or before transmitting the MCG failure information, setting the indication to SCG RLC maximum number of retries.

For example, the method further includes transmitting a radio link failure report including a plurality of fields, one field of the plurality of fields including the indication.

For example, the information related to a reason for the failure of the MCG recovery procedure is transmitted by the WD in an information response message.

For example, a network node configured to communicate with a wireless device (WD) is described. For example, the WD is configured with a dual connectivity (DC) configuration including one or more parameters usable by the WD to communicate using a master cell group (MCG) and a secondary cell group (SCG). For example, the WD is configurable with a fast MCG link recovery configuration. For example, the network node is configured to receive, from the WD, information related to a reason for a failure of an MCG recovery procedure, where the MCG recovery procedure is associated with a failure of the MCG, and perform one or more actions based on the information.

For example, the failure of the MCG recovery procedure occurs after a radio link failure at the MCG.

For example, the information includes an indication indicating the reason for the failure of the MCG recovery procedure, and if a first timer (T316) has expired, the indication is set to an expiry of the T316.

For example, if the T316 has not expired and the SCG was deactivated at an initiation time of the MCG recovery procedure, the indication is set to SCG deactivated.

For example, if the SCG has failed while the T316 was running or before transmitting MCG failure information, a primary secondary cell identity is set to a global cell identity of a primary secondary cell group (PSCell) if available, otherwise to a physical cell identity and carrier frequency of the PSCell.

For example, if the SCG has failed while the T316 was running or before transmitting MCG failure information and if a second timer (T310) expires at the SCG while the T316 was running or before transmitting the MCG failure information, the indication is set to expiry of the T310 at SCG.

For example, if the WD declares a radio link failure at the SCG due to a random access problem indication from SCG Medium Access Control (MAC) while the T316 was running or before transmitting the MCG failure information, the indication is set to SCG random access problem.

For example, the if the WD declares a radio link failure at the SCG due to reaching a maximum number of retransmissions from an MCG radio link control (RLC) while the T316 was running or before transmitting the MCG failure information, the indication is set to SCG RLC maximum number of retries.

For example, the network node is further configured to one or both of receive a radio link failure report including a plurality of fields, where one field of the plurality of fields includes the indication, and receive the information related to a reason for the failure of the MCG recovery procedure is in an information response message.

For example, performing one or more actions includes optimizing a SCG configuration, determining whether to deactivate or configure the SCG, and determining whether to configure the WD for fast MCG link recovery.

For example, a method in network node configured to communicate with a wireless device (WD) is described. For example, the WD is configured with a dual connectivity (DC) configuration including one or more parameters usable by the WD to communicate using a master cell group (MCG) and a secondary cell group (SCG). For example, the WD is configurable with a fast MCG link recovery configuration. For example, the method includes receiving, from the WD, information related to a reason for a failure of an MCG recovery procedure, where the MCG recovery procedure is associated with a failure of the MCG, and performing one or more actions based on the information.

For example, the failure of the MCG recovery procedure occurs after a radio link failure at the MCG.

For example, the information includes an indication indicating the reason for the failure of the MCG recovery procedure, and if a first timer ( T316) has expired, the indication is set to an expiry of the T316.

For example, if the T316 has not expired and the SCG was deactivated at an initiation time of the MCG recovery procedure, the indication is set to SCG deactivated.

For example, if the SCG has failed while the T316 was running or before transmitting MCG failure information, a primary secondary cell identity is set to a global cell identity of a primary secondary cell group (PSCell) if available, otherwise to a physical cell identity and carrier frequency of the PSCell.

For example, if the SCG has failed while the T316 was running or before transmitting MCG failure information and if a second timer (T310) expires at the SCG while the T316 was running or before transmitting the MCG failure information, the indication is set to expiry of the T310 at SCG.

For example, if the WD declares a radio link failure at the SCG due to a random access problem indication from SCG Medium Access Control (MAC) while the T316 was running or before transmitting the MCG failure information, the indication is set to SCG random access problem.

For example, the if the WD declares a radio link failure at the SCG due to reaching a maximum number of retransmissions from an MCG radio link control (RLC) while the T316 was running or before transmitting the MCG failure information, the indication is set to SCG RLC maximum number of retries.

For example, the method further includes one or both of receiving a radio link failure report including a plurality of fields, where one field of the plurality of fields includes the indication, and receiving the information related to a reason for the failure of the MCG recovery procedure is in an information response message.

For example, performing one or more actions includes optimizing a SCG configuration, determining whether to deactivate or configure the SCG, and determining whether to configure the WD for fast MCG link recovery.

### BRIEF DESCRIPTION OF THE DRAWINGS

A more complete understanding of the present embodiments, and the attendant advantages and features thereof, will be more readily understood by reference to the following detailed description when considered in conjunction with the accompanying drawings wherein:
FIG. 1 is an example signaling diagram of a failure indication transmission between two RAN nodes;
FIG. 2 is a schematic diagram of an example network architecture illustrating a communication system connected via an intermediate network to a host computer according to the principles in the present disclosure;
FIG. 3 is a block diagram of a host computer communicating via a network node with a wireless device over an at least partially wireless connection according to some embodiments of the present disclosure;
FIG. 4 is a flowchart illustrating example methods implemented in a communication system including a host computer, a network node and a wireless device for executing a client application at a wireless device according to some embodiments of the present disclosure;
FIG. 5 is a flowchart illustrating example methods implemented in a communication system including a host computer, a network node and a wireless device for receiving user data at a wireless device according to some embodiments of the present disclosure;
FIG. 6 is a flowchart illustrating example methods implemented in a communication system including a host computer, a network node and a wireless device for receiving user data from the wireless device at a host computer according to some embodiments of the present disclosure;
FIG. 7 is a flowchart illustrating example methods implemented in a communication system including a host computer, a network node and a wireless device for receiving user data at a host computer according to some embodiments of the present disclosure;
FIG. 8 is a flowchart of an example process in a network node for addressing the SCG status in the RLF report according to some embodiments of the present disclosure;
FIG. 9 is a flowchart of an example process in a wireless device for addressing the SCG status in the RLF report according to some embodiments of the present disclosure;
FIG. 10 is a flowchart of another example process in a WD according to some embodiments of the present disclosure; and
FIG. 11 is a flowchart of another example process in a network node according to some embodiments of the present disclosure.

### DETAILED DESCRIPTION

Before describing in detail example embodiments, it is noted that the embodiments reside primarily in combinations of apparatus components and processing steps related to addressing the SCG status in the RLF report. Accordingly, components have been represented where appropriate by conventional symbols in the drawings, showing only those specific details that are pertinent to understanding the embodiments so as not to obscure the disclosure with details that will be readily apparent to those of ordinary skill in the art having the benefit of the description herein. Like numbers refer to like elements throughout the description.

As used herein, relational terms, such as "first" and "second," "top" and "bottom," and the like, may be used solely to distinguish one entity or element from another entity or element without necessarily requiring or implying any physical or logical relationship or order between such entities or elements. The terminology used herein is for the purpose of describing particular embodiments only and is not intended to be limiting of the concepts described herein. As used herein, the singular forms "a", "an" and "the" are intended to include the plural forms as well, unless the context clearly indicates otherwise. It will be further understood that the terms "comprises," "comprising," "includes" and/or "including" when used herein, specify the presence of stated features, integers, steps, operations, elements, and/or components, but do not preclude the presence or addition of one or more other features, integers, steps, operations, elements, components, and/or groups thereof.

In embodiments described herein, the joining term, "in communication with" and the like, may be used to indicate electrical or data communication, which may be accomplished by physical contact, induction, electromagnetic radiation, radio signaling, infrared signaling or optical signaling, for example. One having ordinary skill in the art will appreciate that multiple components may interoperate and modifications and variations are possible of achieving the electrical and data communication.

In some embodiments described herein, the term "coupled," "connected," and the like, may be used herein to indicate a connection, although not necessarily directly, and may include wired and/or wireless connections.

The term "network node" used herein can be any kind of network node comprised in a radio network which may further comprise any of base station (BS), radio base station, base transceiver station (BTS), base station controller (BSC), radio network controller (RNC), g Node B (gNB), evolved Node B (eNB or eNodeB), Node B, multi-standard radio (MSR) radio node such as MSR BS, multi-cell/multicast coordination entity (MCE), integrated access and backhaul (IAB) node, relay node, donor node controlling relay, radio access point (AP), transmission points, transmission nodes, Remote Radio Unit (RRU) Remote Radio Head (RRH), a core network node (e.g., mobile management entity (MME), self-organizing network (SON) node, a coordinating node, positioning node, MDT node, etc.), an external node (e.g., 3rd party node, a node external to the current network), nodes in distributed antenna system (DAS), a spectrum access system (SAS) node, an element management system (EMS), etc. The network node may also comprise test equipment. The network node may be a master node (MN) or a secondary node (SN). The term "radio node" used herein may be used to also denote a wireless device (WD) such as a wireless device (WD) or a radio network node.

In some embodiments, the non-limiting terms wireless device (WD) or a user equipment (UE) are used interchangeably. The WD herein can be any type of wireless device capable of communicating with a network node or another WD over radio signals, such as wireless device (WD). The WD may also be a radio communication device, target device, device to device (D2D) WD, machine type WD or WD capable of machine to machine communication (M2M), low-cost and/or low-complexity WD, a sensor equipped with WD, Tablet, mobile terminals, smart phone, laptop embedded equipped (LEE), laptop mounted equipment (LME), USB dongles, Customer Premises Equipment (CPE), an Internet of Things (IoT) device, or a Narrowband IoT (NB-IOT) device, etc.

Also, in some embodiments the generic term "radio network node" is used. It can be any kind of a radio network node which may comprise any of base station, radio base station, base transceiver station, base station controller, network controller, RNC, evolved Node B (eNB), Node B, gNB, Multi-cell/multicast Coordination Entity (MCE), IAB node, relay node, access point, radio access point, Remote Radio Unit (RRU) Remote Radio Head (RRH).

Note that although terminology from one particular wireless system, such as, for example, 3GPP LTE and/or New Radio (NR), may be used in this disclosure, this should not be seen as limiting the scope of the disclosure to only the aforementioned system. Other wireless systems, including without limitation Wide Band Code Division Multiple Access (WCDMA), Worldwide Interoperability for Microwave Access (WiMax), Ultra Mobile Broadband (UMB) and Global System for Mobile Communications (GSM), may also benefit from exploiting the ideas covered within this disclosure.

Note further, that functions described herein as being performed by a wireless device or a network node may be distributed over a plurality of wireless devices and/or network nodes. In other words, it is contemplated that the functions of the network node and wireless device described herein are not limited to performance by a single physical device and, in fact, can be distributed among several physical devices.

Unless otherwise defined, all terms (including technical and scientific terms) used herein have the same meaning as commonly understood by one of ordinary skill in the art to which this disclosure belongs. It will be further understood that terms used herein should be interpreted as having a meaning that is consistent with their meaning in the context of this specification and the relevant art and will not be interpreted in an idealized or overly formal sense unless expressly so defined herein.

Some embodiments provide methods, systems, and apparatuses for addressing the SCG status in the RLF report.

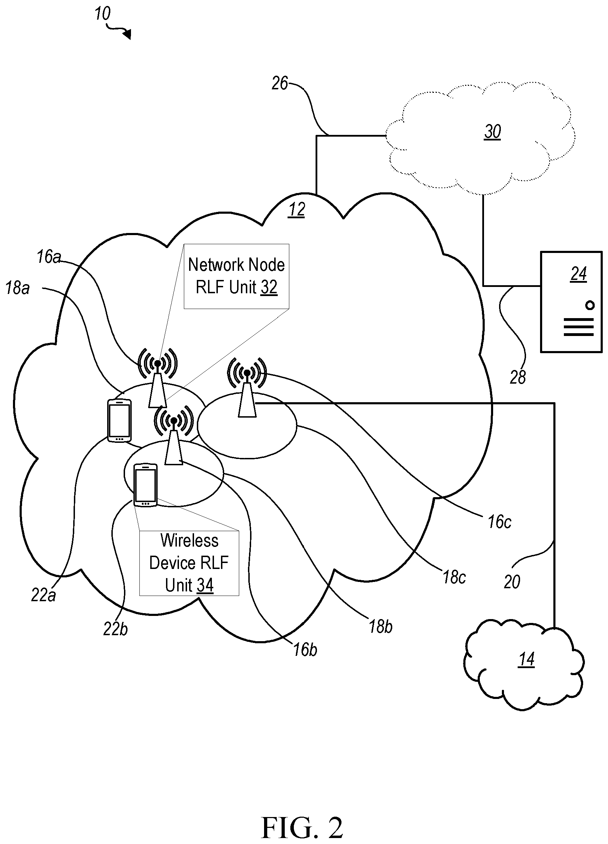

Referring now to the drawing figures, in which like elements are referred to by like reference numerals, there is shown in FIG. 2 a schematic diagram of a communication system 10, according to an embodiment, such as a 3GPP-type cellular network that may support standards such as LTE and/or NR (5G), which comprises an access network 12, such as a radio access network, and a core network 14. The access network 12 comprises a plurality of network nodes 16a, 16b, 16c (referred to collectively as network nodes 16), such as NBs, eNBs, gNBs or other types of wireless access points, each defining a corresponding coverage area 18a, 18b, 18c (referred to collectively as coverage areas 18). Each network node 16a, 16b, 16c is connectable to the core network 14 over a wired or wireless connection 20. A first wireless device (WD) 22a located in coverage area 18a is configured to wirelessly connect to, or be paged by, the corresponding network node 16a. A second WD 22b in coverage area 18b is wirelessly connectable to the corresponding network node 16b. While a plurality of WDs 22a, 22b (collectively referred to as wireless devices 22) are illustrated in this example, the disclosed embodiments are equally applicable to a situation where a sole WD is in the coverage area or where a sole WD is connecting to the corresponding network node 16. Note that although only two WDs 22 and three network nodes 16 are shown for convenience, the communication system may include many more WDs 22 and network nodes 16.

Also, it is contemplated that a WD 22 can be in simultaneous communication and/or configured to separately communicate with more than one network node 16 and more than one type of network node 16. For example, a WD 22 can have dual connectivity with a network node 16 that supports LTE and the same or a different network node 16 that supports NR. As an example, WD 22 can be in communication with an eNB for LTE/E-UTRAN and a gNB for NR/NG-RAN.

The communication system 10 may itself be connected to a host computer 24, which may be embodied in the hardware and/or software of a standalone server, a cloud-implemented server, a distributed server or as processing resources in a server farm. The host computer 24 may be under the ownership or control of a service provider, or may be operated by the service provider or on behalf of the service provider. The connections 26, 28 between the communication system 10 and the host computer 24 may extend directly from the core network 14 to the host computer 24 or may extend via an optional intermediate network 30. The intermediate network 30 may be one of, or a combination of more than one of, a public, private or hosted network. The intermediate network 30, if any, may be a backbone network or the Internet. In some embodiments, the intermediate network 30 may comprise two or more sub-networks (not shown).

The communication system of FIG. 2 as a whole enables connectivity between one of the connected WDs 22a, 22b and the host computer 24. The connectivity may be described as an over-the-top (OTT) connection. The host computer 24 and the connected WDs 22a, 22b are configured to communicate data and/or signaling via the OTT connection, using the access network 12, the core network 14, any intermediate network 30 and possible further infrastructure (not shown) as intermediaries. The OTT connection may be transparent in the sense that at least some of the participating communication devices through which the OTT connection passes are unaware of routing of uplink and downlink communications. For example, a network node 16 may not or need not be informed about the past routing of an incoming downlink communication with data originating from a host computer 24 to be forwarded (e.g., handed over) to a connected WD 22a. Similarly, the network node 16 need not be aware of the future routing of an outgoing uplink communication originating from the WD 22a towards the host computer 24.

A network node 16 is configured to include a Network Node RLF unit 32 which is configured for addressing the SCG status in the RLF report. A wireless device 22 is configured to include a Wireless Device RLF unit 34 which is configured for addressing the SCG status in the RLF report.

Example implementations, in accordance with an embodiment, of the WD 22, network node 16 and host computer 24 discussed in the preceding paragraphs will now be described with reference to FIG. 2. In a communication system 10, a host computer 24 comprises hardware (HW) 38 including a communication interface 40 configured to set up and maintain a wired or wireless connection with an interface of a different communication device of the communication system 10. The host computer 24 further comprises processing circuitry 42, which may have storage and/or processing capabilities. The processing circuitry 42 may include a processor 44 and memory 46. In particular, in addition to or instead of a processor, such as a central processing unit, and memory, the processing circuitry 42 may comprise integrated circuitry for processing and/or control, e.g., one or more processors and/or processor cores and/or FPGAs (Field Programmable Gate Array) and/or ASICs (Application Specific Integrated Circuitry) adapted to execute instructions. The processor 44 may be configured to access (e.g., write to and/or read from) memory 46, which may comprise any kind of volatile and/or non-volatile memory, e.g., cache and/or buffer memory and/or RAM (Random Access Memory) and/or ROM (Read-Only Memory) and/or optical memory and/or EPROM (Erasable Programmable Read-Only Memory).

Processing circuitry 42 may be configured to control any of the methods and/or processes described herein and/or to cause such methods, and/or processes to be performed, e.g., by host computer 24. Processor 44 corresponds to one or more processors 44 for performing host computer 24 functions described herein. The host computer 24 includes memory 46 that is configured to store data, programmatic software code and/or other information described herein. In some embodiments, the software 48 and/or the host application 50 may include instructions that, when executed by the processor 44 and/or processing circuitry 42, causes the processor 44 and/or processing circuitry 42 to perform the processes described herein with respect to host computer 24. The instructions may be software associated with the host computer 24.

The software 48 may be executable by the processing circuitry 42. The software 48 includes a host application 50. The host application 50 may be operable to provide a service to a remote user, such as a WD 22 connecting via an OTT connection 52 terminating at the WD 22 and the host computer 24. In providing the service to the remote user, the host application 50 may provide user data which is transmitted using the OTT connection 52. The "user data" may be data and information described herein as implementing the described functionality. In one embodiment, the host computer 24 may be configured for providing control and functionality to a service provider and may be operated by the service provider or on behalf of the service provider. The processing circuitry 42 of the host computer 24 may enable the host computer 24 to observe, monitor, control, transmit to and/or receive from the network node 16 and or the wireless device 22. The processing circuitry 42 of the host computer 24 may include a Configuration Unit 54 configured to enable the service provider to observe/monitor/ control/transmit to/receive from/etc. the network node 16 and or the wireless device 22.

The communication system 10 further includes a network node 16 provided in a communication system 10 and including hardware 58 enabling it to communicate with the host computer 24 and with the WD 22. The hardware 58 may include a communication interface 60 for setting up and maintaining a wired or wireless connection with an interface of a different communication device of the communication system 10, as well as a radio interface 62 for setting up and maintaining at least a wireless connection 64 with a WD 22 located in a coverage area 18 served by the network node 16. The radio interface 62 may be formed as or may include, for example, one or more RF transmitters, one or more RF receivers, and/or one or more RF transceivers. The communication interface 60 may be configured to facilitate a connection 66 to the host computer 24. The connection 66 may be direct or it may pass through a core network 14 of the communication system 10 and/or through one or more intermediate networks 30 outside the communication system 10.

In the embodiment shown, the hardware 58 of the network node 16 further includes processing circuitry 68. The processing circuitry 68 may include a processor 70 and a memory 72. In particular, in addition to or instead of a processor, such as a central processing unit, and memory, the processing circuitry 68 may comprise integrated circuitry for processing and/or control, e.g., one or more processors and/or processor cores and/or FPGAs (Field Programmable Gate Array) and/or ASICs (Application Specific Integrated Circuitry) adapted to execute instructions. The processor 70 may be configured to access (e.g., write to and/or read from) the memory 72, which may comprise any kind of volatile and/or non-volatile memory, e.g., cache and/or buffer memory and/or RAM (Random Access Memory) and/or ROM (Read-Only Memory) and/or optical memory and/or EPROM (Erasable Programmable Read-Only Memory).

Thus, the network node 16 further has software 74 stored internally in, for example, memory 72, or stored in external memory (e.g., database, storage array, network storage device, etc.) accessible by the network node 16 via an external connection. The software 74 may be executable by the processing circuitry 68. The processing circuitry 68 may be configured to control any of the methods and/or processes described herein and/or to cause such methods, and/or processes to be performed, e.g., by network node 16. Processor 70 corresponds to one or more processors 70 for performing network node 16 functions described herein. The memory 72 is configured to store data, programmatic software code and/or other information described herein. In some embodiments, the software 74 may include instructions that, when executed by the processor 70 and/or processing circuitry 68, causes the processor 70 and/or processing circuitry 68 to perform the processes described herein with respect to network node 16. For example, processing circuitry 68 of the network node 16 may include Network Node RLF unit 32 configured to addressing the SCG status in the RLF report.

The communication system 10 further includes the WD 22 already referred to. The WD 22 may have hardware 80 that may include a radio interface 82 configured to set up and maintain a wireless connection 64 with a network node 16 serving a coverage area 18 in which the WD 22 is currently located. The radio interface 82 may be formed as or may include, for example, one or more RF transmitters, one or more RF receivers, and/or one or more RF transceivers.

The hardware 80 of the WD 22 further includes processing circuitry 84. The processing circuitry 84 may include a processor 86 and memory 88. In particular, in addition to or instead of a processor, such as a central processing unit, and memory, the processing circuitry 84 may comprise integrated circuitry for processing and/or control, e.g., one or more processors and/or processor cores and/or FPGAs (Field Programmable Gate Array) and/or ASICs (Application Specific Integrated Circuitry) adapted to execute instructions. The processor 86 may be configured to access (e.g., write to and/or read from) memory 88, which may comprise any kind of volatile and/or non-volatile memory, e.g., cache and/or buffer memory and/or RAM (Random Access Memory) and/or ROM (Read-Only Memory) and/or optical memory and/or EPROM (Erasable Programmable Read-Only Memory).

Thus, the WD 22 may further comprise software 90, which is stored in, for example, memory 88 at the WD 22, or stored in external memory (e.g., database, storage array, network storage device, etc.) accessible by the WD 22. The software 90 may be executable by the processing circuitry 84. The software 90 may include a client application 92. The client application 92 may be operable to provide a service to a human or non-human user via the WD 22, with the support of the host computer 24. In the host computer 24, an executing host application 50 may communicate with the executing client application 92 via the OTT connection 52 terminating at the WD 22 and the host computer 24. In providing the service to the user, the client application 92 may receive request data from the host application 50 and provide user data in response to the request data. The OTT connection 52 may transfer both the request data and the user data. The client application 92 may interact with the user to generate the user data that it provides.

The processing circuitry 84 may be configured to control any of the methods and/or processes described herein and/or to cause such methods, and/or processes to be performed, e.g., by WD 22. The processor 86 corresponds to one or more processors 86 for performing WD 22 functions described herein. The WD 22 includes memory 88 that is configured to store data, programmatic software code and/or other information described herein. In some embodiments, the software 90 and/or the client application 92 may include instructions that, when executed by the processor 86 and/or processing circuitry 84, causes the processor 86 and/or processing circuitry 84 to perform the processes described herein with respect to WD 22. For example, the processing circuitry 84 of the wireless device 22 may include a Wireless Device RLF unit 34 configured for addressing the SCG status in the RLF report.

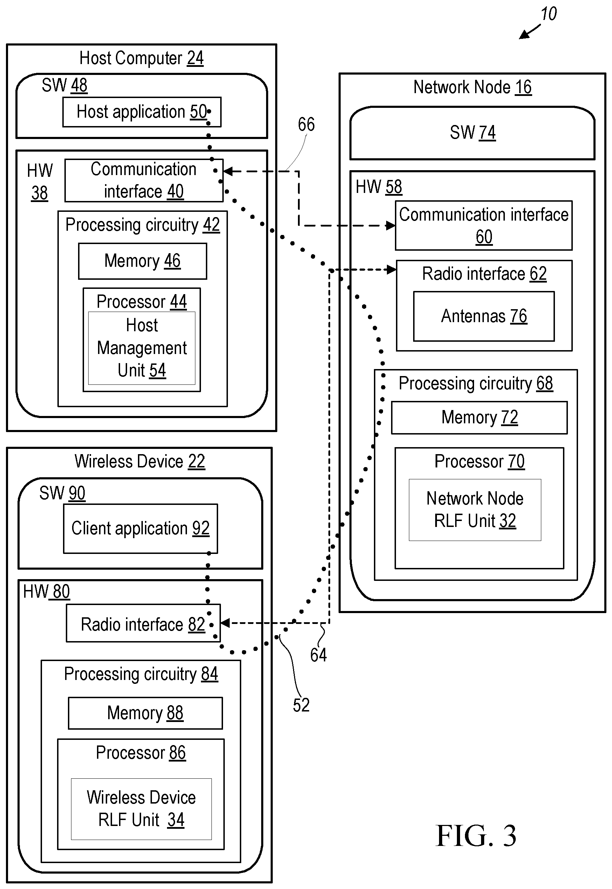

In some embodiments, the inner workings of the network node 16, WD 22, and host computer 24 may be as shown in FIG. 3 and independently, the surrounding network topology may be that of FIG. 2.

In FIG. 3, the OTT connection 52 has been drawn abstractly to illustrate the communication between the host computer 24 and the wireless device 22 via the network node 16, without explicit reference to any intermediary devices and the precise routing of messages via these devices. Network infrastructure may determine the routing, which it may be configured to hide from the WD 22 or from the service provider operating the host computer 24, or both. While the OTT connection 52 is active, the network infrastructure may further take decisions by which it dynamically changes the routing (e.g., on the basis of load balancing consideration or reconfiguration of the network).

The wireless connection 64 between the WD 22 and the network node 16 is in accordance with the teachings of the embodiments described throughout this disclosure. One or more of the various embodiments improve the performance of OTT services provided to the WD 22 using the OTT connection 52, in which the wireless connection 64 may form the last segment. More precisely, the teachings of some of these embodiments may improve the data rate, latency, and/or power consumption and thereby provide benefits such as reduced user waiting time, relaxed restriction on file size, better responsiveness, extended battery lifetime, etc.

In some embodiments, a measurement procedure may be provided for the purpose of monitoring data rate, latency and other factors on which the one or more embodiments improve. There may further be an optional network functionality for reconfiguring the OTT connection 52 between the host computer 24 and WD 22, in response to variations in the measurement results. The measurement procedure and/or the network functionality for reconfiguring the OTT connection 52 may be implemented in the software 48 of the host computer 24 or in the software 90 of the WD 22, or both. In embodiments, sensors (not shown) may be deployed in or in association with communication devices through which the OTT connection 52 passes; the sensors may participate in the measurement procedure by supplying values of the monitored quantities exemplified above, or supplying values of other physical quantities from which software 48, 90 may compute or estimate the monitored quantities. The reconfiguring of the OTT connection 52 may include message format, retransmission settings, preferred routing etc.; the reconfiguring need not affect the network node 16, and it may be unknown or imperceptible to the network node 16. Some such procedures and functionalities may be known and practiced in the art. In certain embodiments, measurements may involve proprietary WD signaling facilitating the host computer's 24 measurements of throughput, propagation times, latency and the like. In some embodiments, the measurements may be implemented in that the software 48, 90 causes messages to be transmitted, in particular empty or 'dummy' messages, using the OTT connection 52 while it monitors propagation times, errors, etc.

Thus, in some embodiments, the host computer 24 includes processing circuitry 42 configured to provide user data and a communication interface 40 that is configured to forward the user data to a cellular network for transmission to the WD 22. In some embodiments, the cellular network also includes the network node 16 with a radio interface 62. In some embodiments, the network node 16 is configured to, and/or the network node's 16 processing circuitry 68 is configured to perform the functions and/or methods described herein for preparing/initiating/maintaining/supporting/ending a transmission to the WD 22, and/or preparing/terminating/maintaining/supporting/ending in receipt of a transmission from the WD 22.

In some embodiments, the host computer 24 includes processing circuitry 42 and a communication interface 40 that is configured to a communication interface 40 configured to receive user data originating from a transmission from a WD 22 to a network node 16. In some embodiments, the WD 22 is configured to, and/or comprises a radio interface 82 and/or processing circuitry 84 configured to perform the functions and/or methods described herein for preparing/initiating/maintaining/supporting/ending a transmission to the network node 16, and/or preparing/terminating/maintaining/supporting/ending in receipt of a transmission from the network node 16.

Although FIGS. 2 and 3 show various "units" such as Network Node RLF Unit 32, and Wireless Device RLF Unit 34 as being within a respective processor, it is contemplated that these units may be implemented such that a portion of the unit is stored in a corresponding memory within the processing circuitry. In other words, the units may be implemented in hardware or in a combination of hardware and software within the processing circuitry.

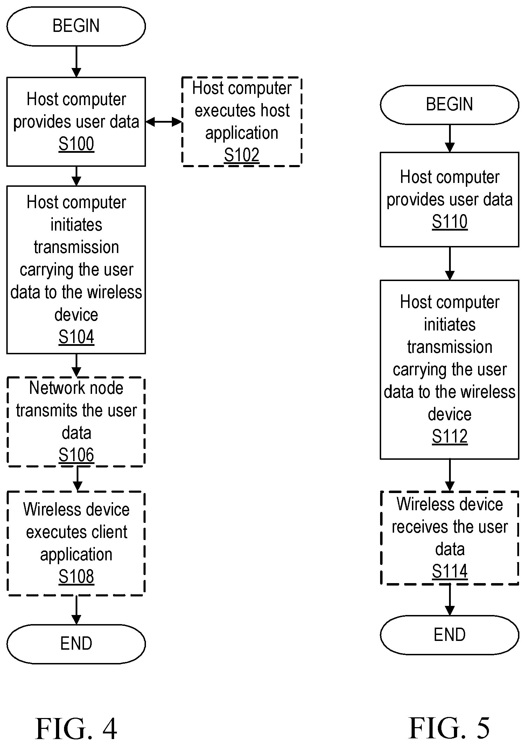

FIG. 4 is a flowchart illustrating an example method implemented in a communication system, such as, for example, the communication system of FIGS. 2 and 3, in accordance with one embodiment. The communication system may include a host computer 24, a network node 16 and a WD 22, which may be those described with reference to FIG. 3. In a first step of the method, the host computer 24 provides user data (Block S100). In an optional substep of the first step, the host computer 24 provides the user data by executing a host application, such as, for example, the host application 50 (Block S102). In a second step, the host computer 24 initiates a transmission carrying the user data to the WD 22 (Block S104). In an optional third step, the network node 16 transmits to the WD 22 the user data which was carried in the transmission that the host computer 24 initiated, in accordance with the teachings of the embodiments described throughout this disclosure (Block S106). In an optional fourth step, the WD 22 executes a client application, such as, for example, the client application 92, associated with the host application 50 executed by the host computer 24 (Block S108).

FIG. 5 is a flowchart illustrating an example method implemented in a communication system, such as, for example, the communication system of FIG. 2, in accordance with one embodiment. The communication system may include a host computer 24, a network node 16 and a WD 22, which may be those described with reference to FIGS. 2 and 3. In a first step of the method, the host computer 24 provides user data (Block S110). In an optional substep (not shown) the host computer 24 provides the user data by executing a host application, such as, for example, the host application 50. In a second step, the host computer 24 initiates a transmission carrying the user data to the WD 22 (Block S112). The transmission may pass via the network node 16, in accordance with the teachings of the embodiments described throughout this disclosure. In an optional third step, the WD 22 receives the user data carried in the transmission (Block S114).

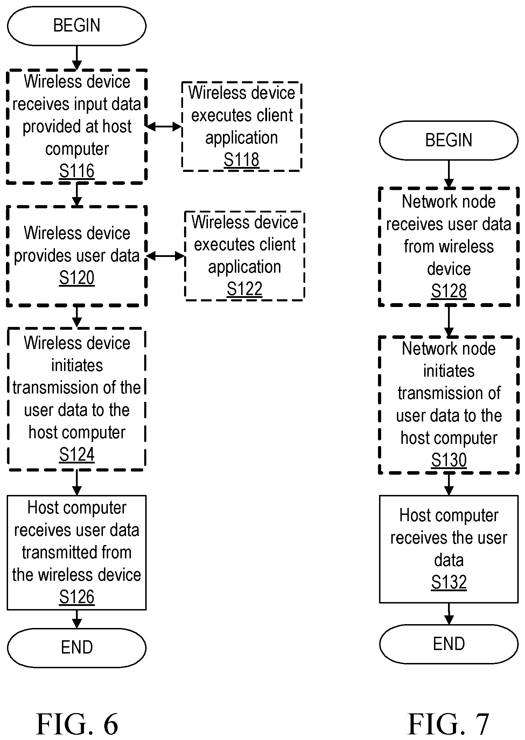

FIG. 6 is a flowchart illustrating an example method implemented in a communication system, such as, for example, the communication system of FIG. 2, in accordance with one embodiment. The communication system may include a host computer 24, a network node 16 and a WD 22, which may be those described with reference to FIGS. 2 and 3. In an optional first step of the method, the WD 22 receives input data provided by the host computer 24 (Block S116). In an optional substep of the first step, the WD 22 executes the client application 92, which provides the user data in reaction to the received input data provided by the host computer 24 (Block S118). Additionally or alternatively, in an optional second step, the WD 22 provides user data (Block S120). In an optional substep of the second step, the WD provides the user data by executing a client application, such as, for example, client application 92 (Block S122). In providing the user data, the executed client application 92 may further consider user input received from the user. Regardless of the specific manner in which the user data was provided, the WD 22 may initiate, in an optional third substep, transmission of the user data to the host computer 24 (Block S124). In a fourth step of the method, the host computer 24 receives the user data transmitted from the WD 22, in accordance with the teachings of the embodiments described throughout this disclosure (Block S126).

FIG. 7 is a flowchart illustrating an example method implemented in a communication system, such as, for example, the communication system of FIG. 2, in accordance with one embodiment. The communication system may include a host computer 24, a network node 16 and a WD 22, which may be those described with reference to FIGS. 2 and 3. In an optional first step of the method, in accordance with the teachings of the embodiments described throughout this disclosure, the network node 16 receives user data from the WD 22 (Block S128). In an optional second step, the network node 16 initiates transmission of the received user data to the host computer 24 (Block S130). In a third step, the host computer 24 receives the user data carried in the transmission initiated by the network node 16 (Block S132).

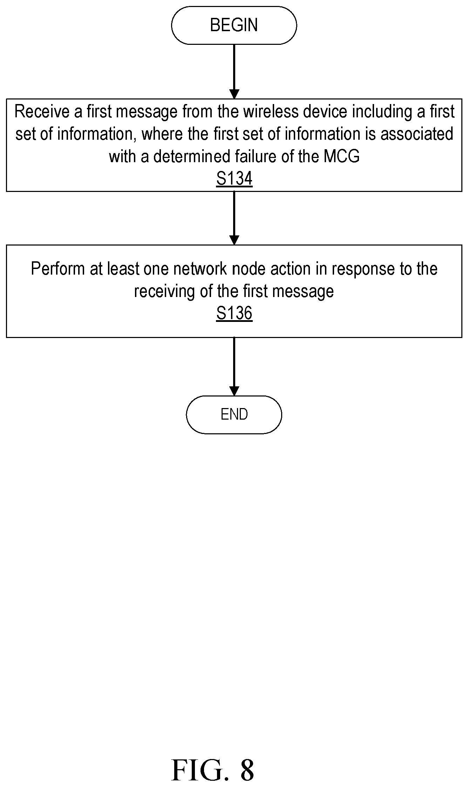

FIG. 8 is a flowchart of an example process in a network node 16 for addressing the SCG status in the RLF report. One or more blocks described herein may be performed by one or more elements of network node 16 such as by one or more of processing circuitry 68 (including the Network Node RLF unit 32), processor 70, radio interface 62 and/or communication interface 60. Network node 16 is configured to communicate with a wireless device 22, where the wireless device 22 is configured with a dual connectivity configuration including a Master Cell Group (MCG) and a Secondary Cell Group (SCG). A first message is received (Block S134) from the wireless device 22 including a first set of information, where the first set of information is associated with a determined failure of the MCG. At least one network node action is performed (Block S136) in response to the receiving of the first message.

In some embodiments, the receiving of the first message is based on the wireless device 22 being configured with a fast MCG link recovery configuration. In some embodiments, an indication is received from the wireless device 22 indicating an availability of a second message, where the second message includes a second set of information associated with at least one of the determined failure on the MCG, and a determination that SCG is one of suspended, deactivated, neither suspended nor deactivated, and not configured in the dual connectivity configuration, and may further include a determination of whether fast MCG link recovery is configured. A request is transmitted to the wireless device 22 for the second message. The second message is received from the wireless device 22 in response to the request. In some embodiments, the second message further includes a third set of information associated with a determination that the SCG has failed.

In some embodiments, the network node 16 is determined to be a master node (MN) of the dual connectivity configuration. A request is transmitted to the wireless device 22 requesting to collect a radio link failure (RLF) report associated with the SCG stored by the wireless device 22. In response to the request, the RLF report associated with the SCG is received.

In some embodiments, the second set of information further includes at least one of legacy information associated to the MCG failure, a cell global identity of a primary secondary cell (PSCell) associated with the wireless device 22, a status of the SCG at the moment of the MCG failure, where the status includes at least one of an indication that the SCG is suspended, an indication that the SCG is deactivated, an indication that the SCG is not configured, and an indication of whether fast MCG link recovery was configured at the moment of the MCG failure, a time elapsed between SCG suspension and the MCG failure, a time elapsed between the SCG configuration release or the release of a timer and the MCG failure, a fourth set of information associated to the SCG failure in relation to the MCG failure, including at least one of a time elapsed between experiencing the SCG failure and the MCG failure, and an indication indicating whether failure occurred first in time in the SCG or in the MCG, and a most recent radio measurement associated with the PSCell.

In some embodiments, the performing of the at least one network node action includes modifying the dual connectivity configuration, the modifying including at least one of deactivating the SCG, releasing the SCG, modifying a configuration of the SCG, and modifying a fast MCG link recovery configuration for the wireless device 22.

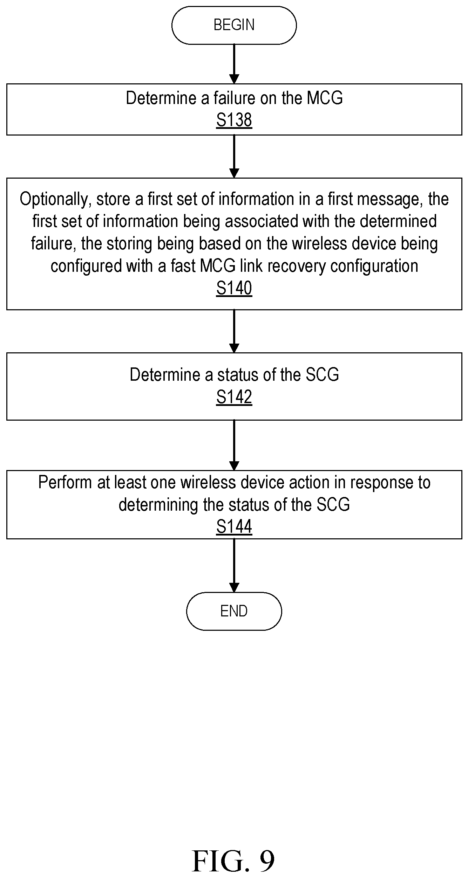

FIG. 9 is a flowchart of an example process in a wireless device 22 according to some embodiments of the present disclosure for addressing the SCG status in the RLF report. One or more blocks described herein may be performed by one or more elements of wireless device 22 such as by one or more of processing circuitry 84 (including the Wireless Device RLF Unit 34), processor 86, radio interface 82 and/or communication interface 60. Wireless device 22 is configured to communicate with a network node 16, where the wireless device 22 is configured with a dual connectivity configuration including a Master Cell Group (MCG) and a Secondary Cell Group (SCG). A failure is determined (Block S138) on the MCG. Optionally, a first set of information is stored (Block S140) in a first message (e.g., in memory 88), where the first set of information is associated with the determined failure, and the storing is based on the wireless device 22 being configured with a fast MCG link recovery configuration. A status of the SCG is determined (Block S142). At least one wireless device action is performed (Block S144) in response to determining the status of the SCG.

In some embodiments, the performing of the at least one wireless device action in response to determining the status of the SCG includes determining that the SCG is not deactivated and/or not suspended, causing transmission of the first message to the network node 16, and storing a second set of information in a second message associated with the determined failure on the MCG and the determined SCG being not deactivated and/or not suspended, where the storing is based on the wireless device 22 being configured with the fast MCG link recovery configuration.

In some embodiments, the performing of the at least one wireless device action in response to determining the status of the SCG includes determining that the SCG is deactivated, and storing a second set of information in a second message associated with the determined failure on the MCG and the determined SCG being deactivated, where the storing is based on the wireless device 22 being configured with the fast MCG link recovery configuration.

In some embodiments, the performing of the at least one wireless device action in response to determining the status of the SCG includes determining that the SCG is suspended, and storing a second set of information in a second message associated with the determined failure on the MCG and the determined SCG being suspended, where the storing is based on the wireless device 22 being configured with the fast MCG link recovery configuration.

In some embodiments, the performing of the at least one wireless device action in response to determining the status of the SCG includes storing a second set of information in a second message, where the second set of information is associated with the determined failure on the MCG and at least one of a determination that the SCG is not configured, and the wireless device 22 not being configured with a fast MCG link recovery configuration. In some embodiments, the performing of the at least one wireless device action in response to determining the status of the SCG includes determining that the SCG has failed, storing a third set of information in the second message in response to the determining that the SCG has failed, causing transmission to the network node 16 of an availability indication associated with the information included in the second message, where the information in the second message includes the first set of information, the second set of information, and the third set of information, and optionally, causing transmission of the second message to the network node 16 based on a request from the network node 16 for the second message.

In some embodiments, the second set of information further includes at least one of legacy information associated to the MCG failure, a cell global identity of a primary secondary cell (PSCell) associated with the wireless device 22, a status of the SCG at the moment of the MCG failure, where the status includes at least one of an indication that the SCG is suspended, an indication that the SCG is deactivated, an indication that the SCG is not configured, and an indication of whether fast MCG link recovery was configured at the moment of the MCG failure, a time elapsed between SCG suspension and the MCG failure, a time elapsed between the SCG configuration release or the release of a timer and the MCG failure, a fourth set of information associated to the SCG failure in relation to the MCG failure, including at least one of a time elapsed between experiencing the SCG failure and the MCG failure, and an indication indicating whether failure occurred first in time in the SCG or in the MCG, and a most recent radio measurement associated with the PSCell. In some embodiments, the performing of the at least one wireless device action in response to determining the status of the SCG includes causing transmission of a failure message to the network node 16. In response to the transmitting of the failure message, an updated configuration is received from network node 16 including at least one of a deactivation of the SCG, a releasing of the SCG, an updated configuration of the SCG, and a fast MCG link recovery configuration for the wireless device 22.

In some embodiments, a capability indication is transmitted to a secondary node (SN) (e.g., network node 16) associated with the SCG. The capability indication indicates that the wireless device 22 is capable of reporting Radio Link Failure (RLF) associated with the SCG and/or indicates a radio access technology (RAT) type of the MCG.

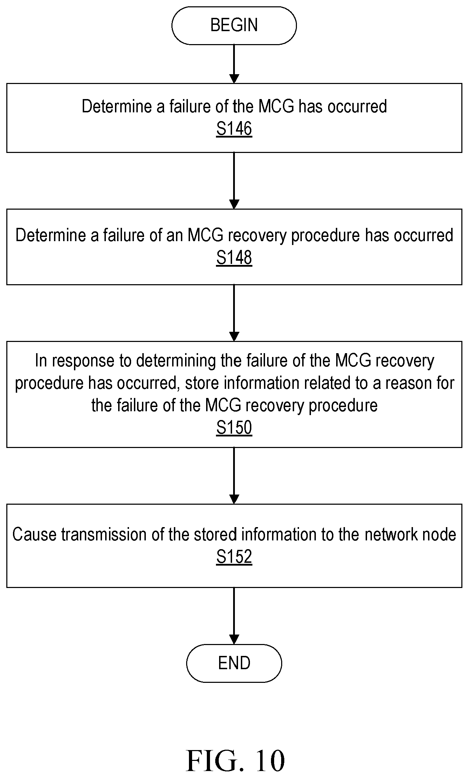

FIG. 10 is a flowchart of another example process in a WD 22 according to some embodiments of the present disclosure for addressing the SCG status in the RLF report. One or more blocks described herein may be performed by one or more elements of WD 22 such as by one or more of processing circuitry 84 (including the Wireless Device RLF Unit 34), processor 86, radio interface 82 and/or communication interface 60. WD 22 is configured to communicate with a network node 16. The WD 22 is configured with a dual connectivity (DC) configuration including one or more parameters usable by the WD 22 to communicate using a master cell group (MCG) and a secondary cell group (SCG). The WD 22 is configurable with a fast MCG link recovery configuration. Further, the WD 22 being configured to determine (Block S146) a failure of the MCG has occurred, determine (Block S148) a failure of an MCG recovery procedure has occurred, and in response to determining the failure of the MCG recovery procedure has occurred, store (Block S150) information related to a reason for the failure of the MCG recovery procedure and cause transmission of (Block S152) the stored information to the network node 16.

In some embodiments, the method further includes determining the failure of the MCG recovery procedure has occurred after detection of a radio link failure at the MCG.

In some other embodiments, the information includes an indication indicating the reason for the failure of the MCG recovery procedure. The method further includes, if a first timer (T316) has expired, setting the indication to an expiry of the T316.

In some embodiments, the method further includes, if the T316 has not expired and the SCG was deactivated at an initiation time of the MCG recovery procedure, setting the indication to SCG deactivated.

In some other embodiments, the method further includes, if the SCG has failed while the T316 was running or before transmitting MCG failure information, setting a primary secondary cell identity to a global cell identity of a primary secondary cell group (PSCell) if available, otherwise to a physical cell identity and carrier frequency of the PSCell.

In some embodiments, the method further includes, if the SCG has failed while the T316 was running or before transmitting MCG failure information and if a second timer (T310) expires at the SCG while the T316 was running or before transmitting the MCG failure information, setting the indication to expiry of the T310 at SCG.

In some other embodiments, the method further includes, if the WD declares a radio link failure at the SCG due to a random access problem indication from SCG Medium Access Control (MAC) while the T316 was running or before transmitting the MCG failure information, setting the indication to SCG random access problem.

In some embodiments, the method further includes, if the WD declares a radio link failure at the SCG due to reaching a maximum number of retransmissions from an MCG radio link control (RLC) while the T316 was running or before transmitting the MCG failure information, setting the indication to SCG RLC maximum number of retries.

In some other embodiments, the method further includes transmitting a radio link failure report including a plurality of fields, one field of the plurality of fields including the indication.

In some embodiments, the information related to a reason for the failure of the MCG recovery procedure is transmitted by the WD 22 in an information response message.

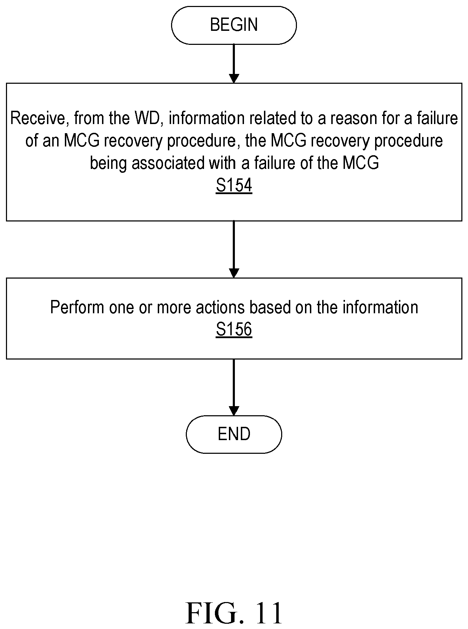

FIG. 11 is a flowchart of another example process in a network node 16 for addressing the SCG status in the RLF report. One or more blocks described herein may be performed by one or more elements of network node 16 such as by one or more of processing circuitry 68 (including the Network Node RLF unit 32), processor 70, radio interface 62 and/or communication interface 60. Network node 16 is configured to communicate with a WD 22. The WD 22 is configured with a dual connectivity (DC) configuration including one or more parameters usable by the WD 22 to communicate using a master cell group (MCG) and a secondary cell group (SCG). The WD 22 is configurable with a fast MCG link recovery configuration. Further, the network node 16 is configured to receive (Block S154), from the WD 22, information related to a reason for a failure of an MCG recovery procedure, where the MCG recovery procedure is associated with a failure of the MCG, and perform (Block S156) one or more actions based on the information.

In some embodiments, the failure of the MCG recovery procedure occurs after a radio link failure at the MCG.

In some other embodiments, the information includes an indication indicating the reason for the failure of the MCG recovery procedure, and if a first timer ( T316) has expired, the indication is set to an expiry of the T316.

In some embodiments, if the T316 has not expired and the SCG was deactivated at an initiation time of the MCG recovery procedure, the indication is set to SCG deactivated.

In some other embodiments, if the SCG has failed while the T316 was running or before transmitting MCG failure information, a primary secondary cell identity is set to a global cell identity of a primary secondary cell group (PSCell) if available, otherwise to a physical cell identity and carrier frequency of the PSCell.

In some embodiments, if the SCG has failed while the T316 was running or before transmitting MCG failure information and if a second timer (T310) expires at the SCG while the T316 was running or before transmitting the MCG failure information, the indication is set to expiry of the T310 at SCG.

In some other embodiments, if the WD 22 declares a radio link failure at the SCG due to a random access problem indication from SCG Medium Access Control (MAC) while the T316 was running or before transmitting the MCG failure information, the indication is set to SCG random access problem.

In some embodiments, the if the WD 22 declares a radio link failure at the SCG due to reaching a maximum number of retransmissions from an MCG radio link control (RLC) while the T316 was running or before transmitting the MCG failure information, the indication is set to SCG RLC maximum number of retries.

In some other embodiments, the method further includes one or both of receiving a radio link failure report including a plurality of fields, where one field of the plurality of fields includes the indication, and receiving the information related to a reason for the failure of the MCG recovery procedure is in an information response message.

In some embodiments, performing one or more actions includes optimizing a SCG configuration, determining whether to deactivate or configure the SCG, and determining whether to configure the WD 22 for fast MCG link recovery.

Having described the general process flow of arrangements of the disclosure and having provided examples of hardware and software arrangements for implementing the processes and functions of the disclosure, the sections below provide details and examples of arrangements for addressing the SCG status in the RLF report.

Some embodiments of the present disclosure are provided for NR radio access technology. However, embodiments of the present disclosure may be applicable to any other radio access technology that supports dual connectivity, e.g., as described in 3GPP TS 36.331 and/or 3GPP TS 38.331 V17.1.0.

Embodiments of the present disclosure may be applicable for any other technology related to multi connectivity where there is a failure reporting of first connection towards a second connection, i.e., a connection between public network (PN) and non-PN (NPN) network.

In NR or EUTRA DC operation, WD 22 may encounter a failure towards the MCG. For fast link MCG recovery, WD 22 may suspend transmission of all bearers associated to the master cell group and prepares an MCGFailureInformation message.

Embodiments of the present disclosure provide a method at a WD 22 (e.g., a UE) in NR or EUTRA DC operation when the WD 22 encounters a failure related to MCG while SCG becomes either deactivated by the network or suspended, due to, for example, a radio link failure experienced in the SCG.

### The status of a secondary cell group:

According to one or more embodiments of the present disclosure, upon detecting that the secondary cell group is not suspended or deactivated, the WD 22 transmits the first message including the first set of information to a first network node 16 and stores a second set of information in a second message associated to the detected failure on the master cell group with secondary cell group not deactivated/suspended. In some embodiments, this operation is only performed fast MCG link recovery is configured, e.g., a timer associated with fast MCG link recovery, such as T316 timer, is configured, in which case the information that the SCG is not deactivated/suspended implies that fast MCG link recovery is successful.

According to one or more embodiments of the present disclosure, upon detecting the secondary cell group becoming suspended, the WD 22 stores a second set of information in a second message, where the second set of information is associated to the detected failure on the master cell group with secondary cell group suspended. In some embodiments, this operation may only be performed if fast MCG link recovery is configured, e.g., a timer associated with fast MCG link recovery, such as T316 timer, is configured, in which case the information that the SCG is suspended implies that fast MCG link recovery is not successful . In some methods, the SCG is suspended if the WD 22 experienced an RLF in the SCG

In some embodiments, upon detecting the secondary cell group becomes deactivated, WD 22 stores a second set of information in a second message, where the second set of information is associated to the detected failure on the master cell group with secondary cell group deactivated. In some embodiments, this operation is only performed fast MCG link recovery is configured, e.g., a timer associated with fast MCG link recovery, such as T316 timer, is configured, in which case the information that the SCG is not activate implies that fast MCG link recovery is not successful.

In some embodiments, if fast MCG link recovery is not configured or if the SCG is not configured, the WD 22 may store a second set of information in a second message, where the second set of information is associated to the detected failure on the master cell group with SCG not configured and/or with fast MCG link recovery not configured.

In some embodiments, upon detecting the secondary cell group is failed, i.e., SCG RLF (in other words, WD 22 already detected a radio link failure on SCG), then the WD 22 stores a third set of information in a second message, where the second set of information is associated to the detected failure on the secondary cell group. Such third set of information may be included in the second message which also included information related to the MCG RLF.

In some embodiments, the WD 22 may store both secondary cell group (SCG) and master cell group (MCG) failure related information in RLF report at the time of failure of both SCG and MCG. In other words, the WD 22 may detect failures associated with dual connectivity operation. Therefore, at the time of failure, the WD 22 may store a first set of information related to the detected failure on the MCG that led to the failure on the MCG, wherein the first set of information may only be stored if the WD 22 is configured with fast MCG link recovery, e.g., a timer associated with fast MCG link recovery, such as T316 timer, is configured. In some embodiments, furthermore, WD 22 stores the second set of information, which may include, for example, one or more of the following:
▪ a set of information related to the detected failure on the MCG that led to the failure on the MCG, which may partially comprise information included in the first set of information;
▪ a set of information related to the SCG state at the moment of the MCG failure, for example, one or more of:
   ∘ The PSCell identifier, if SCG is configured;
   ∘ Indication of SCG suspended, i.e., RLF experienced in SCG;
   ∘ Indication of SCG deactivated;
   ∘ Indication of SCG not configured;
   ∘ If the SCG was not active at the moment of the MCG RLF, the time elapsed between the SCG deactivation and the MCG RLF;
   ∘ If the SCG was suspended at the moment of the MCG RLF, the time elapsed between the SCG suspension and the MCG RLF;
   ∘ If the SCG was not configured at the moment of the MCG RLF or if the timer (e.g., timer T316) was not configured at the time of the MCG RLF, the time elapsed between the SCG configuration release or timer (T316) release and the MCG RLF. In some embodiments, if the PSCell ID is not included, it may imply that the WD 22 is not configured with SCG, and that timer (T316) is not configured; and
   ∘ If an RLF is experienced in the SCG, a set of information associated to the SCG RLF in relation to the MCG RLF, for example:
      ▪ The time elapsed between experiencing the failure in the SCG and the failure in the MCG; and
      ▪ An indication indicating whether the RLF occurred first in time in the SCG or in the MCG.

Further, the second set of information may comprise the cell global identity (CGI) of the PSCell if available. It may also comprise the latest radio measurements available associated to the PSCell. In some embodiments, this information may only be provided in case an RLF is experienced also in the SCG. In another embodiment, that information is provided as long as the SCG is configured at the time of the MCG RLF. In yet another embodiment, that information is provided as long as the SCG is activated at the time of the MCG RLF.

The WD 22 may then include in the RLF-Report, for example, the second message, the first set of information if available, the second set of information, and the third set of information if available. In some embodiments, upon the MCG RLF, the WD 22 may store in separate WD variables the first set of information (if available), the second set of information, and the third set of information (if available). In an alternative embodiment, the WD 22 may append the first set of information and third set of information to the second set of information and the WD 22 only stores the second set of information in a WD variable. As per this latter embodiment, the WD 22 may only include in the second message to be transmitted the second set of information.

In some embodiments, the WD 22 may only report parts of the first set of information, e.g., information which is not included in the second set of information or third set of information, so that there are not duplicated information conveyed in the second message. For example, the WD 22 may not include in the second message the failure type (i.e., T310 expiry, random access problem, maximum number of RLC retransmissions, etc.) since that is already present in the second set of information. The WD 22 may not include the measurement results associated with those frequencies configured to be measured by the MCG and for which measurement results are already reported in the second set of information. The WD 22 may instead include measurement results for those frequencies that are configured to be monitored by the SCG, for example, MeasResultSCG, etc.

In one embodiment, the WD 22 may only report parts of the third set of information, e.g., that information which is not included in the second set of information or first set of information, so that there is no duplicated information conveyed in the second message. For example, the WD 22 may not include the measurement results associated with those frequencies that are already reported in the second set of information. The WD 22 may not include the location information if those are already present in the second set of information, etc. The WD 22 may instead include, for example, the PSCell to which the WD 22 was connected before connecting to the failed PSCell, the time elapsed since the last reconfiguration with sync for the PSCell, the random access information if the failure is due to a random access failure, etc.

Later when RLF report/the second message is fetched by a network node 16, the network node 16 determines that the WD 22 was in DC operation which it is not only failed on master link (e.g., a network node 16 of the MCG) but also it is failed on secondary link (e.g., a network node 16 of the SCG). The network node 16 may further determine on the basis of the received information whether the SCG was deactivated at the time of the MCG failure, and for how long that has been deactivated. On the basis of this, the network node 16 may, for example, correlate the radio measurements indicating in the RLF-report with the SCG state, and for example, may avoid for certain radio quality levels to deactivate the SCG, and may configure the fast MCG link recovery, so that the WD 22 may exploit the MCG Failure Information procedure and recover its connection via the SCG, rather than via a reestablishment procedure.

An example 3GPP standard implementation including features in accordance with one or more embodiments of the present disclosure is as follows:

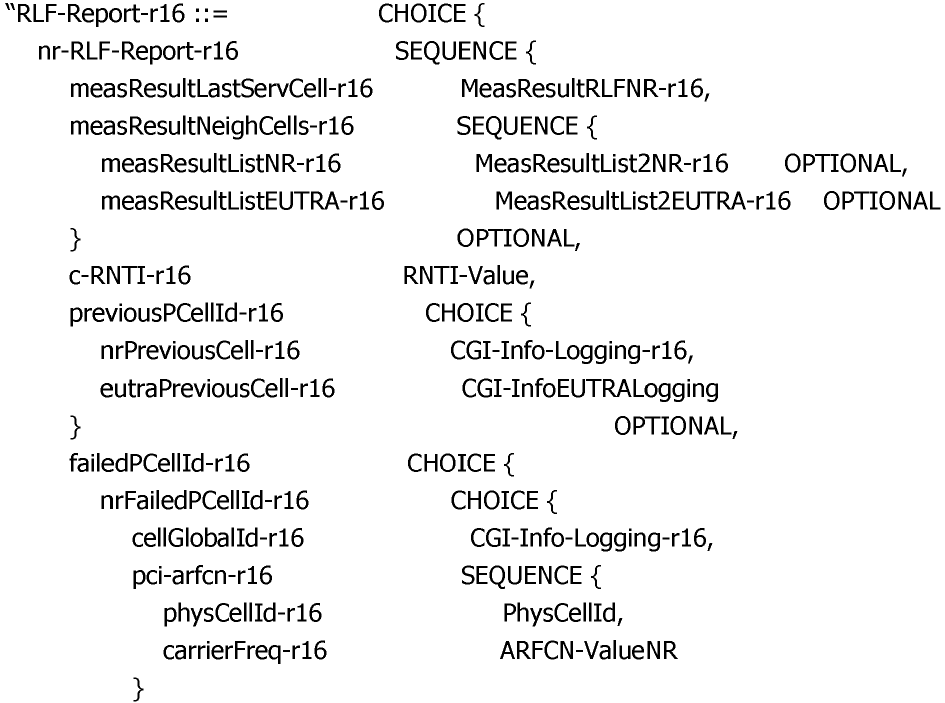

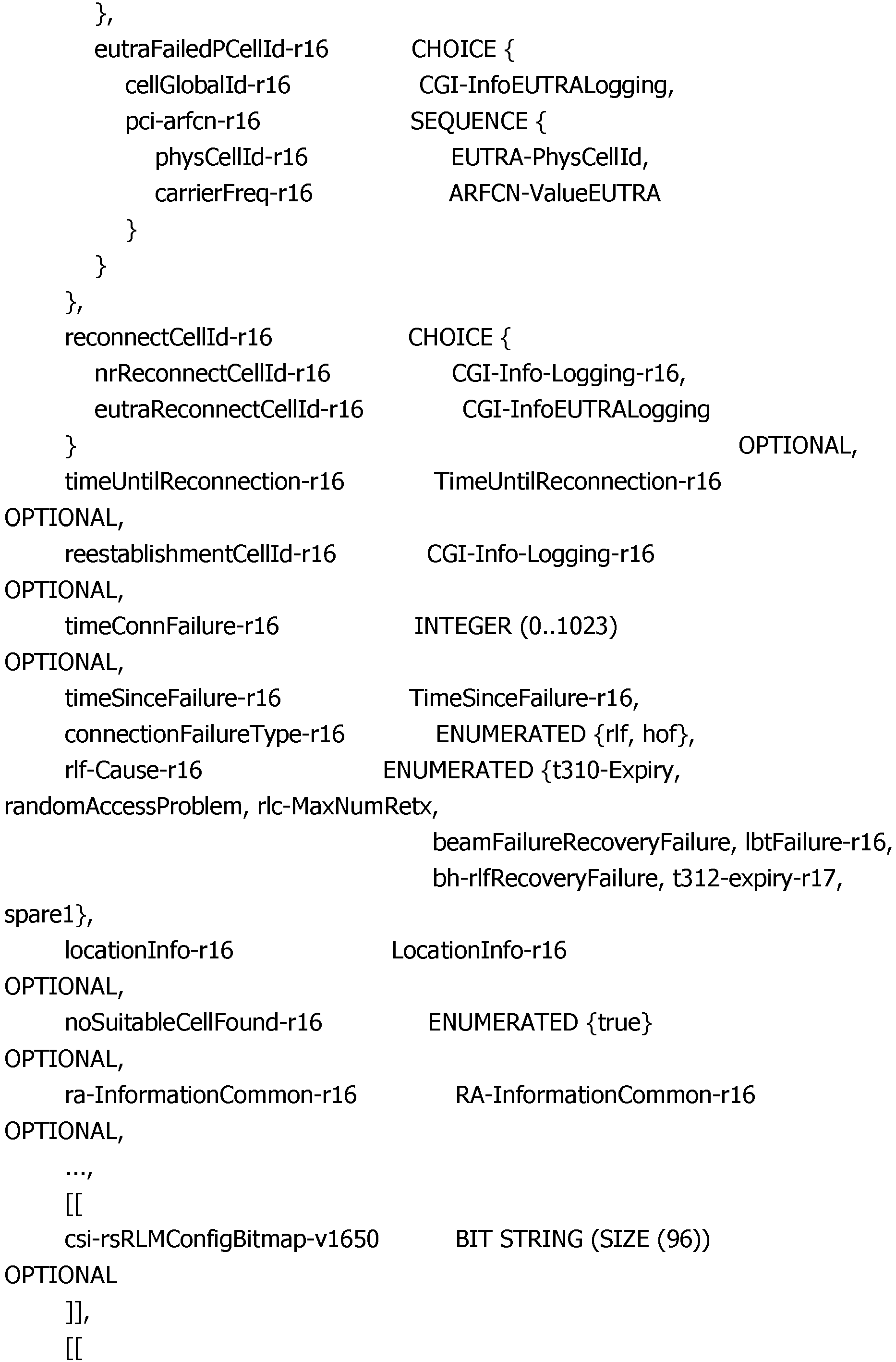

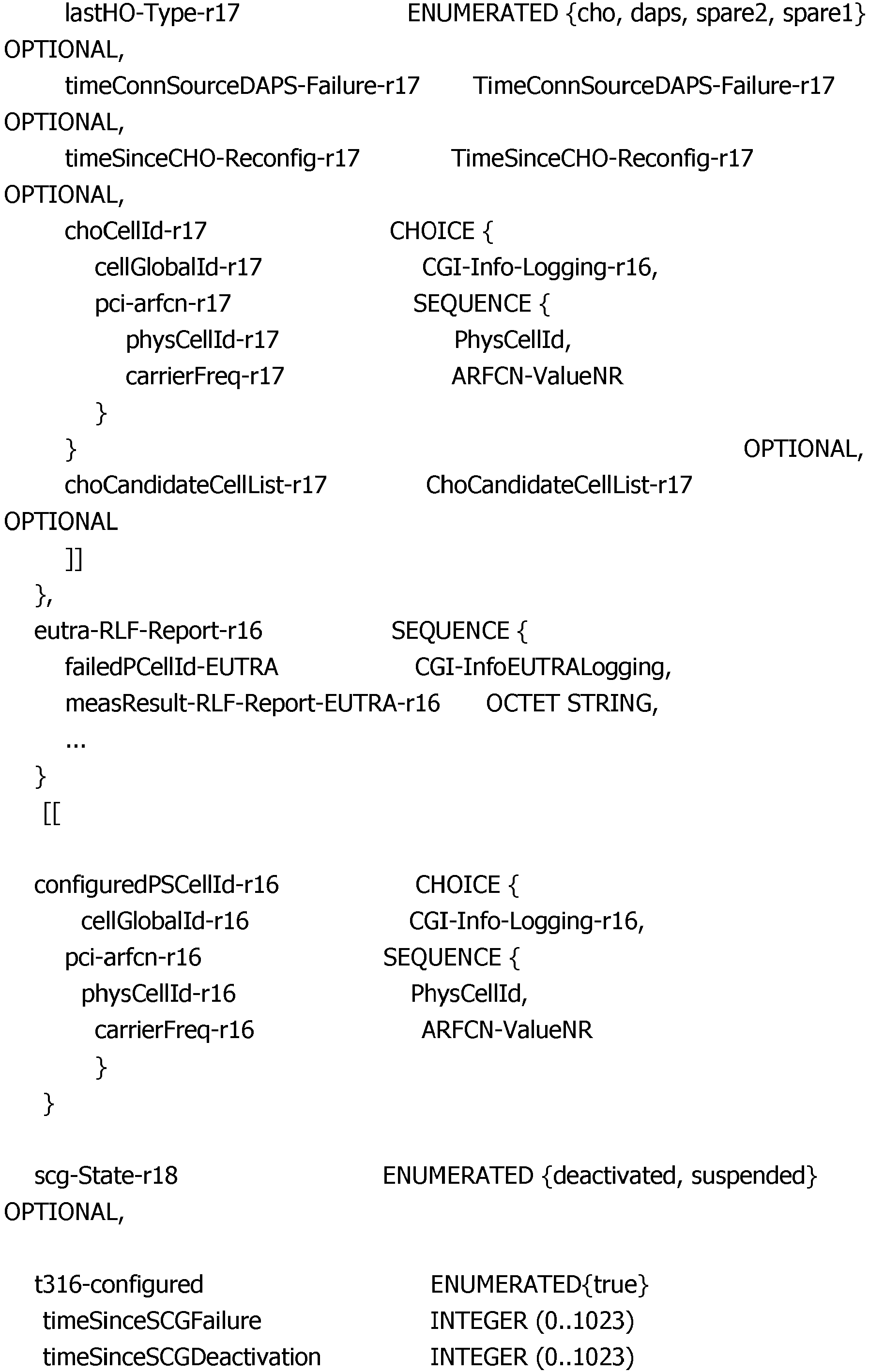

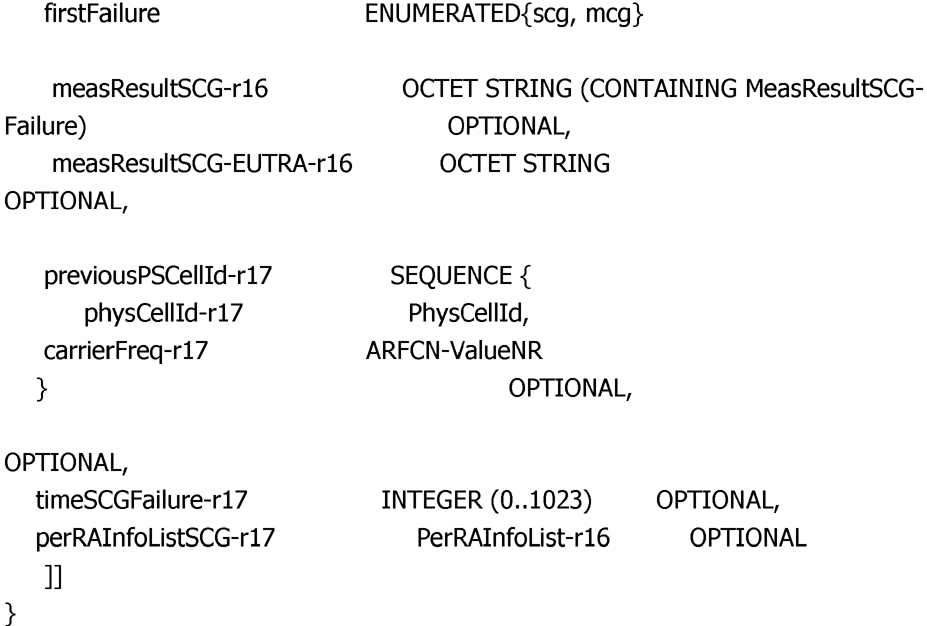

**Table 3. - RLF Report Field Descriptions.**

| ***RLF-Report* field descriptions** |
|---|
| ***configuredPSCellId*** |
| This field is used to indicate the PSCell which was configured at the time of the detected failure |
| **scg-State** |
| This field is used to indicate whether the SCG was deactivated at the time of the detected failure, or if was suspended, i.e., failure detected in the SCG also. |
| **t316-configured** |
| This field is used to indicate whether the t316 was configured at the time of the detected failure. |
| **timeSinceSCGFailure** |
| This field is used to indicate the time elapsed between the failure detected in the MCG and the failure detected in the SCG. Value in milliseconds. The maximum value 1023 means 1023ms or longer |
| **timeSinceSCG Deactivation** |
| This field is used to indicate the time elapsed between the failure detected in the MCG and the deactivation of the SCG. Value in milliseconds. The maximum value 1023 means 1023ms or longer |
| **firstFailure** |
| If a failure is detected in the SCG after detecting a failure in the MCG, or if a failure is detected in the MCG after declaring a failure in the MCG, this field |
| indicates whichever of MCG RLF or SCG RLF was detected first in time |
| **measResultSCG** |
| The field contains the *MeasResultSCG-Failure* IE which includes available measurement results on NR frequencies the UE is configured to measure by the *measConfig* associated with the SCG |
| **measResultSCG-EUTRA** |
| The field contains the EUTRA *MeasResultSCG-FailureMRDC* IE which includes available results of measurements on E-UTRA frequencies the UE is configured to measure by the E-UTRA *RRCConnectionReconfiguration* message as specified in TS 36.331 [10]. |
| **previousPSCellId** |
| This field indicates the PSCell to which the UE was connected before experiencing the failure in the current PSCell |
| **timeSCGFailure** |
| This field is used to indicate the time elapsed since the last execution of *RRCReconfiguration* with *reconfigurationWithSync* for the SCG until the SCG failure. Actual value = field value * 100ms. The maximum value 1023 means 102.3s or longer. |
| **perRAInfoListSCG** |
| This field provides detailed information about each of the random access attempts in the chronological order of the random access attempts performed in the current PSCell |

### 5.3.10.3 Detection of radio link failure

The UE may:
1> if any DAPS bearer is configured and T304 is running:
   2> upon T310 expiry in source SpCell; or
   2> upon random access problem indication from source MCG MAC; or
   2> upon indication from source MCG RLC that the maximum number of retransmissions has been reached; or
   2> upon consistent uplink LBT failure indication from source MCG MAC:
      3> consider radio link failure to be detected for the source MCG i.e., source RLF;
      3> suspend the transmission and reception of all DRBs and multicast MRBs in the source MCG;
      3> reset MAC for the source MCG;
      3> release the source connection.
1> else:
   2> during a DAPS handover: the following only applies for the target PCell;
   2> upon T310 expiry in PCell; or
   2> upon T312 expiry in PCell; or
   2> upon random access problem indication from MCG MAC while neither T300, T301, T304, T311 nor T319 are running; or
   2> upon indication from MCG RLC that the maximum number of retransmissions has been reached; or
   2> if connected as an IAB-node, upon BH RLF indication received on BAP entity from the MCG; or
   2> upon consistent uplink LBT failure indication from MCG MAC while T304 is not running:
      3> if the indication is from MCG RLC and CA duplication is configured and activated for MCG, and for the corresponding logical channel *allowedServingCells* only includes SCell(s):
         4> initiate the failure information procedure as specified in 5.7.5 to report RLC failure.
      3> else:
         4> consider radio link failure to be detected for the MCG, i.e., MCG RLF;
         4> discard any segments of segmented RRC messages stored according to 5.7.6.3;
NOTE: Void.
   4> if AS security has not been activated:
      5> perform the actions upon going to RRC_IDLE as specified in 5.3.11, with release cause 'other';-
   4> else if AS security has been activated but SRB2 and at least one DRB or multicast MRB or, for IAB, SRB2, have not been setup:
      5> store the radio link failure information in the *VarRLF-Report* as described in clause 5.3.10.5;
      5> perform the actions upon going to RRC_IDLE as specified in 5.3.11, with release cause 'RRC connection failure';
   4> else:
      5> store the radio link failure information in the *VarRLF-Report* as described in clause 5.3.10.5;
      5> if T316 is configured; and
      5> if SCG transmission is not suspended; and
      5> if the SCG is not deactivated; and
      5> if neither PSCell change nor PSCell addition is ongoing (i.e., timer T304 for the NR PSCell is not running in case of NR-DC or timer T307 of the E-UTRA PSCell is not running as specified in TS 36.331 [10], clause 5.3.10.10, in NE-DC):
         6> initiate the MCG failure information procedure as specified in 5.7.3b to report MCG radio link failure.
      5> else:
         6> if T316 is configured and SCG transmission is suspended:
            7> set the *scg-State* to *suspended* in the *VarRLF-Report*;
            7> set the *t316-configured* to *true in* the *VarRLF-Report;*
            7> set the *firstFailure* to *mcg* or *scg* in the *VarRLF-Report* depending on whether the RLF occurred first in time in the MCG or SCG;
            7> set the *timeSinceSCGFailure* to the time elapsed between the RLF in the MCG and the RLF in the SCG;
            7> set the previousPSCellId to the physical cell identity and carrier frequency of the source PSCell associated to the last received RRCReconfiguration message including reconfigurationWithSync for the SCG;
            7> set the timeSCGFailure to the elapsed time since reception of the last RRCReconfiguration message including the reconfigurationWithSync for the SCG until declaring the SCG failure;
            7> set perRAInfoList to indicate the random access procedure related information performed in the PSCell as specified in 5.7.10.5
            7> include and set MeasResultSCG-Failure in accordance with 5.7.3.4
         6> if T316 is configured and SCG transmission is deactivated:
            7> set the *scg-State* to *deactivated* in the *VarRLF-Report*;
            7> set the *timeSinceSCGDeactivation* to the time elapsed between the RLF in the MCG and the deactivation of the SCG;
            7> set the *t316-configured* to *true in* the *VarRLF-Report;*
            7> include and set MeasResultSCG-Failure in accordance with 5.7.3.4
         6> initiate the connection re-establishment procedure as specified in 5.3.7."

The following is yet another non-limiting example 3GPP implementation of RLF content determination, e.g., in an RRC specification, with features in accordance with embodiments of the present disclosure emphasized in **bolded** text:

### "5.3.10.5 RLF report content determination

The UE may determine the content in the *VarRLF-Reportas* follows:
1> clear the information included in *VarRLF-Report,* if any;
1> set the *plmn-IdentityList* to include the list of EPLMNs stored by the UE (i.e., includes the RPLMN);
   ...
   2> if configuration of the conditional handover is available in *VarConditionalReconfig* at the moment of declaring the radio link failure:
      3> set *timeSinceCHO-Reconfig to* the time elapsed between the detection of the radio link failure, and the reception, in the source PCell, of the last *conditionalReconfiguration* including the *condRRCReconfig* message;
      3> set *choCandidateCellList* to include the global cell identity and tracking area code of all the candidate target cells for conditional handover included in *condRRCReconfig* within *VarConditionalReconfig* at the time of radio link failure, excluding the candidate target cells included in *measResulNeighCells,*
      ...
**1>set the *configuredPSCellId* to the global cell identity and the tracking area code, if available, and otherwise to the physical cell identity and carrier frequency of the PCell where radio link failure is detected;**
**1> if T316 is configured and SCG transmission is suspended:**
   **2> set the *scg-State* to *suspended* in the *VarRLF-Report.***
**1> if T316 is configured and SCG transmission is deactivated:**
   **2> set the *scg-State* to *deactivated* in the *VarRLF-Report***
**1> if the UE detected a radio link failure at the SCG:**
   **2> set the *scg-State* to *failed* in the *VarRLF-Report.***
1> if *connectionFailureType* is *hof* and if the failed handover is an intra-RAT handover:
   2> set the *ra-InformationCommon* to include the random-access related information as described in clause 5.7.10.5;
1> if available, set the *locationlnfo as* in 5.3.3.7."

In some embodiments, the WD 22 may include an explicit capability indication to the SN (e.g., a network node 16 of the SCG) e.g., via SRB3 or other messages, such as RRC messages, that it is capable of reporting radio link failure (RLF) associated with the SCG, e.g., an RLF-ReportSCG, indicating the ability to report RLF-ReportSCG via RLF report or other RRC messages, etc. The capability may be further separated in terms of the radio access technology (RAT) type of the MCG, e.g., the capability indication related to EUTRA or NR MCG.

In some embodiments, the WD 22 may include an explicit capability indication to the MN (e.g., network node 16 of the MCG) that it is capable of reporting RLF-ReportSCG or any other RLF report associated with the SCG, indicating the ability to report via RLF report or other RRC messages, etc.. The capability may be further separated in terms of the RAT type of the MCG e.g., the capability indication related to EUTRA or NR MCG.

In some embodiments, the MN (e.g., network node 16 of the MCG) may explicitly include an indication to the WD 22 that it is requesting collecting RLF-ReportSCG (or any other RLF report associated with the SCG) stored by the WD 22 in the UEInformationRequest message or any other RRC messages, e.g., RRCSetup, etc. The network node 16 (e.g., the MN) may be aware of its own configuration that SCG is deactivated at the time of failure. Upon reception of the request, the WD 22 may include RLF-ReportSCG (or any other RLF report associated with the SCG) upon RAN node request in the UEInformationResponse message or any other RRC messages, e.g., RRCReconfigurationComplete message right after RRCReestablishmentComplete message or RRCSetupComplete in case the WD 22 is capable of storing of RLF-ReportSCG (or any other RLF report associated with the SCG).

Another example 3GPP implementation in accordance with features of embodiments of the present disclosure is as follows:

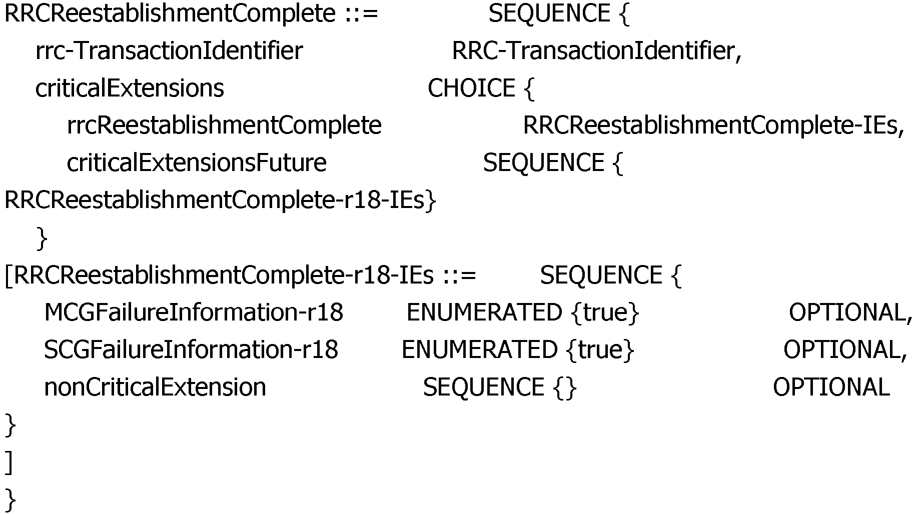

In some embodiments, WD 22 may perform either a reestablishment procedure and/or an access towards a network node 16 and the network node 16 may explicitly include an indication to the WD 22 that it is requesting collecting of the second set of information stored by the WD 22. The WD 22 may report upon RAN node (e.g., network node 16) request via an indication in the UEInformationResponse message or any other appropriate RRC messages, i.e., RRCReconfigurationComplete message, for example, right after RRCReestablishmentComplete message, or RRCSetupComplete in case the WD 22 is capable of storing of RLF-ReportSCG.

In some embodiments, RLF report content may be determined by the WD 22. In the claimed invention, the SCG has been deactivated at the time of initiation of the fast MCG recovery procedure, and hence, the mcgRecoveryFailure Cause is set to scgDeactivated. Other scenarios, which do not form part of the claimed invention are possible.
For example, the WD 22 may perform one or more of the following steps:
1> if the fast MCG recovery procedure fails after detection of radio link failure at the MCG as described in 5.3.10.3:
   2> if the timer T316 expires:
      3> set the mcgRecoveryFailure-Cause to t316-expiry;
   2> else if SCG was failed while the timer T316 was running or before transmitting MCGFailureInformation:
      3> set the failedPSCellId to the global cell identity of the PSCell, if available, otherwise to the physical cell identity and carrier frequency of the PSCell;
      3> if the timer T310 expires at the SCG while the timer T316 was running or before transmitting MCGFailureInformation:
         4> set mcgRecoveryFailure-Cause to scg-t310-Expiry;
      3> else if the UE declares radio link failure at the SCG due to the random access problem indication from SCG MAC while the timer T316 was running or before transmitting MCGFailureInformation:
         4> set the mcgRecoveryFailure-Cause as scg-randomAccessProblem;
      3> else if the UE declares radio link failure at the SCG due to the reaching of maximum number of retransmissions from the MCG RLC while the timer T316 was running or before transmitting MCGFailureInformation:
         4> set the mcgRecoveryFailure-Cause as scg-rlc-MaxNumRetx;

In some embodiments, an information response message (e.g., *UEInformationResponse* message) may be is used by WD 22 to transfer information requested by the network. The *UEInformationResponse* may include one or more of the following: 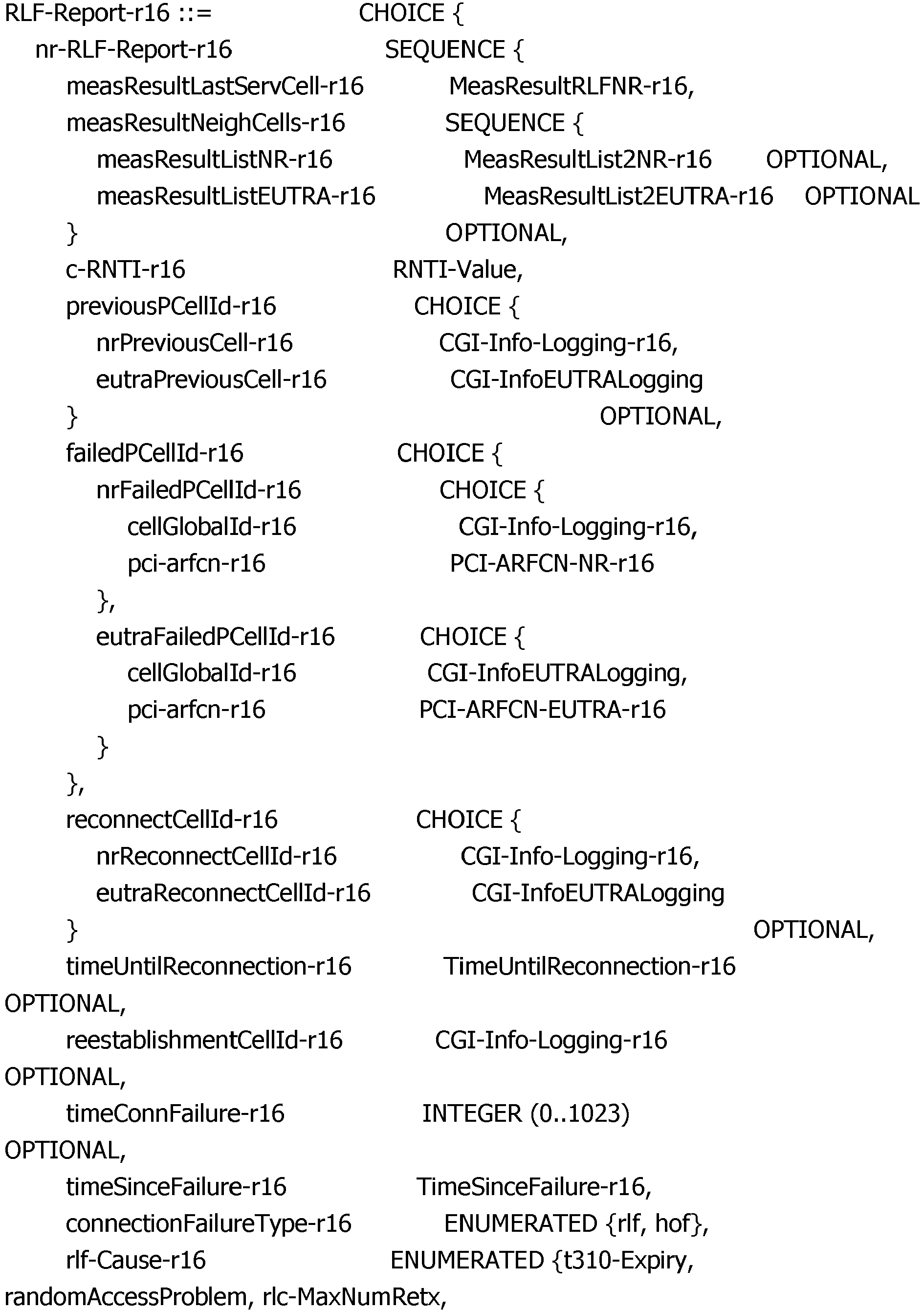 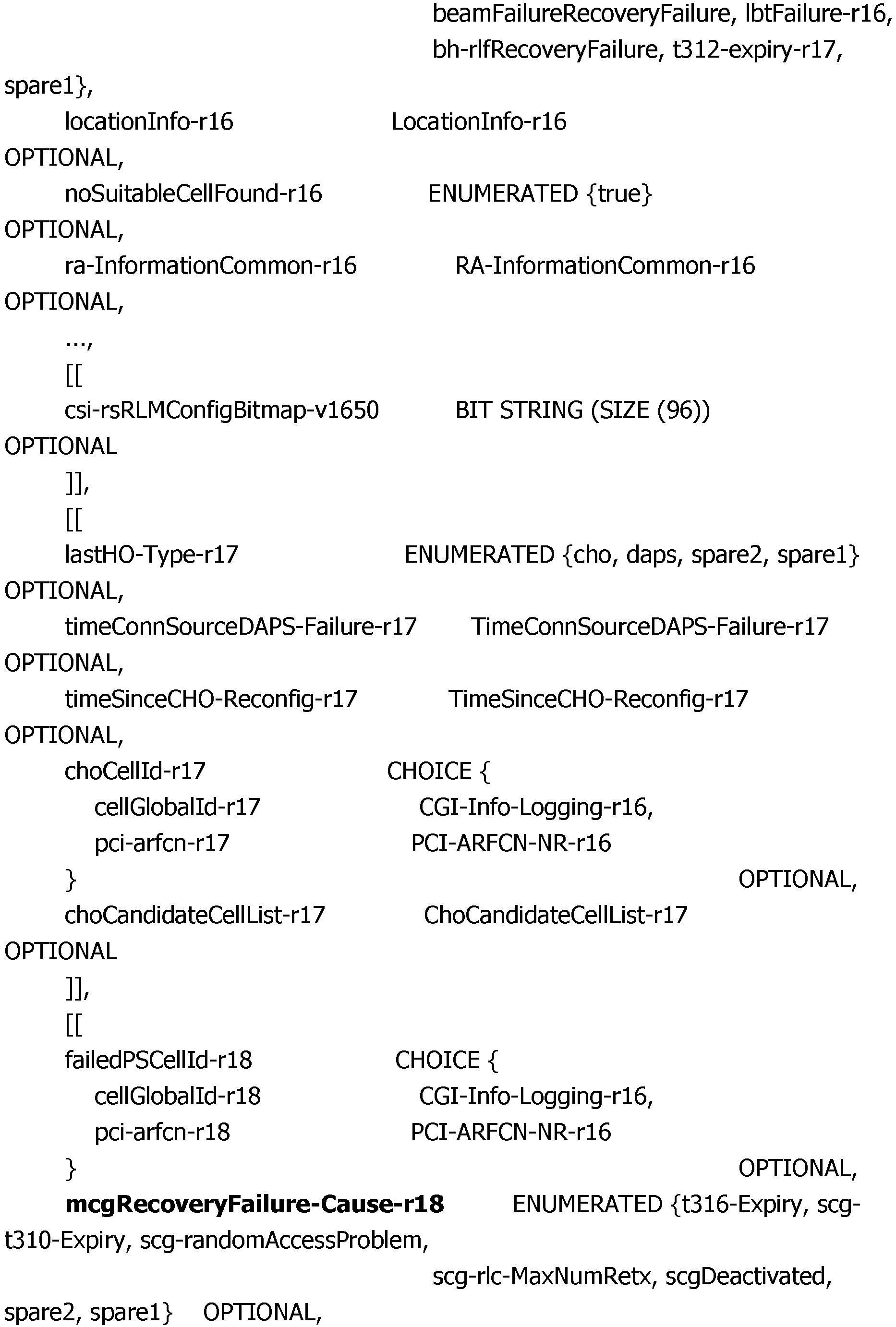 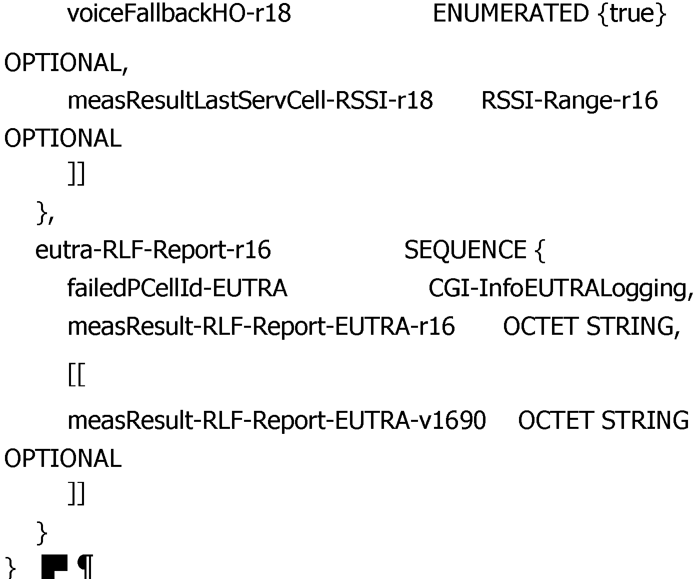 In the claimed invention, said mcgRecoveryFailure-Cause-r18 is set to scgDeactivated.

**Table 4. - RLF-Report field descriptions, including an indication indicating the reason for the failure of the MCG recovery procedure (i.e., mcgRecoveryFailure-Cause).**

| ***RLF-Report* field descriptions** |
|---|
| ***choCandidateCellList*** |
| This field is used to indicate the list of candidate target cells for conditional handover included in *condRRCReconfig* at the time of connection failure. The field does not include the candidate target cells included in *measResulNeighCells.* |
| ***chocellId*** |
| This field is used to indicate the candidate target cell for conditional handover included in *condRRCReconfig* that the UE selected for CHO based recovery while T311 is running. |
| ***connectionFailureType*** |
| This field is used to indicate whether the connection failure is due to radio link failure or handover failure. |
| ***csi-rsRLMConfigBitmap,csi-rsRLMConfigBitmap-v1650*** |
| These fields are used to indicate the CSI-RS indexes configured in the RLM configurations for the active BWP when the UE declares RLF or HOF. The UE first fills in the *csi-rsRLMConfigBitmap-r16* to indicate the first 96 CSI-RS indexes and then *csi-rsRLMConfigBitmap-v1650* to indicate the latter 96 CSI-RS indexes. The first/leftmost bit in *csi-rsRLMConfigBitmap-r16 corresponds* to CSI-RS index 0, the second bit corresponds to CSI-RS index 1. The first/leftmost bit in *csi-rsRLMConfigBitmap-v1650* corresponds to CSI-RS index 96, the second bit corresponds to CSI-RS index 97. These fields are included only if the *RadioLinkMonitoringConfig* for the respective BWP is configured. |
| ***c-RNTI*** |
| This field indicates the C-RNTI used in the PCell upon detecting radio link failure or the C-RNTI used in the source PCell upon handover failure. |
| ***failedPCellId*** |
| This field is used to indicate the PCell in which RLF is detected or the target PCell of the failed handover. For intra-NR handover *nrFailedPCellId* is included and for the handover from NR to EUTRA *eutraFailedPCellId* is included. The UE sets the ARFCN according to the frequency band used for transmission/ reception when the failure occurred. |
| ***failedPCellId-EUTRA*** |
| This field is used to indicate the PCell in which RLF is detected or the source PCell of the failed handover in an E-UTRA RLF report. |
| ***failedPSCellId*** |
| This field is used to indicate the PSCell in which the UE failed to perform fast MCG recovery procedure. |
| ***lastHO-Type*** |
| This field is used to indicate the type of the last executed handover before the last detected connection failure. The field is set to *cho* if the last executed handover was initiated by a conditional reconfiguration execution. The field is set to *daps* if the last executed handover was a DAPS handover. |
| ***mcgRecoveryFailure-Cause*** |
| This field is used to indicate the cause of the fast MCG recovery failure. |
| ***measResultListEUTRA*** |
| This field refers to the last measurement results taken in the neighboring EUTRA Cells, when the radio link failure or handover failure happened. |
| ***measResultListNR*** |
| This field refers to the last measurement results taken in the neighboring NR Cells, when the radio link failure or handover failure happened. |
| ***measResultLastServCell*** |
| This field refers to the log measurement results taken in the PCell upon detecting radio link failure or the source PCell upon handover failure. |
| ***measResultLastServCell-RSSI*** |
| This field refers to the log RSSI measurement results in dBm (see TS 38.215 [9]) taken for the frequency of the PCell upon detecting radio link failure. |
| ***measResult-RLF-Report-EUTRA*** |
| Includes the E-UTRA *RLF-Report-r9*IE as specified in TS 36.331 [10]. |
| ***measResult-RLF-Report-EUTRA-v1690*** |
| Includes the E-UTRA *RLF-Report-v9e0* IE as specified in TS 36.331 [10]. |
| ***noSuitableCellFound*** |
| This field is set by the UE when the T311 expires. |
| ***previousPCellId*** |
| This field is used to indicate the source PCell of the last handover (source PCell when the last executed *RRCReconfiguration* message including *reconfigurationWithSync* was received). For intra-NR handover *nrPreviousCell* is included and for the handover from EUTRA to NR *eutraPreviousCell* is included. |
| ***ra-InformationCommon*** |
| This field is optionally included when *connectionFailureType* is set to 'hof' or when *connectionFailureType* is set to 'rlf' and the *rlf-Cause* equals to 'randomAccessProblem' or 'beamRecoveryFailure'; otherwise this field is absent. |
| ***reconnectCellId*** |
| This field is used to indicate the cell in which the UE comes back to connected after connection failure and after failing to perform reestablishment. If the UE comes back to RRC CONNECTED in an NR cell then *nrReconnectCellID* is included and if the UE comes back to RRC CONNECTED in an LTE cell then *eutraReconnectCellID* is included |
| ***reestablishmentCellId*** |
| If the UE was not configured with *conditionalReconfiguration* at the time of re-establishment attempt, or if the cell selected for the reestablishment attempt is not a candidate target cell for conditional reconfiguration, this field is used to indicate the cell in which the reestablishment attempt was made after connection failure. |
| ***rlf-Cause*** |
| This field is used to indicate the cause of the last radio link failure that was detected. In case of handover failure information reporting (i.e., the *connectionFailureType* is set to *'hot'*)*,* the UE is allowed to set this field to any value, except for the case in which a radio link failure was detected in the source PCell while performing a DAPS handover.. |
| ***ssbRLMConfigBitmap*** |
| This field is used to indicate the SS/PBCH block indexes configured in the RLM configurations for the active BWP when the UE declares RLF or HOF.The first/leftmost bit corresponds to SSB index 0, the second bit corresponds to SSB index 1. This field is included only if the *RadioLinkMonitoringConfig* for the respective BWP is configured. |
| ***timeConnFailure*** |
| This field is used to indicate the time elapsed since the last HO execution until connection failure. Actual value = field value * 100ms. The maximum value 1023 means 102.3s or longer. |
| ***timeConnSourceDAPS-Failure*** |
| This field is used to indicate the time that elapsed between the last DAPS handover execution and the radio link failure detected in the source cell while T304 is running. Value in milliseconds. The maximum value 1023 means 1023ms or longer. |
| ***timeSinceFailure*** |
| This field is used to indicate the time that elapsed since the connection (radio link or handover) failure. Value in seconds. The maximum value 172800 means 172800s or longer. In the case of failure(s) (either at source or at target or at both) associated to DAPS handover, this field indicates the time elapsed since the latest connection (radio link or handover) failure. |
| ***timeSinceCHO-Reconfig*** |
| In case of handover failure, this field is used to indicate the time elapsed between the initiation of the last conditional reconfiguration execution towards the target cell and the reception of the latest conditional reconfiguration. In case of radio link failure, this field is used to indicate the time elapsed between the radio link failure and the reception of the latest conditional reconfiguration while connected to the source PCell. Actual value = field value * 100ms. The maximum value 1023 means 102.3s or longer. |
| ***timeUntilReconnection*** |
| This field is used to indicate the time that elapsed between the connection (radio link or handover) failure and the next time the UE comes to RRC CONNECTED in an NR or EUTRA cell, after failing to perform reestablishment. Value in seconds. The maximum value 172800 means 172800s or longer. |
| ***voiceFallbackHO*** |
| This field is set if for the failed mobility from NR, the *voiceFallbackIndication* was included in the *MobilityFromNRCommand* message. |

As will be appreciated by one of skill in the art, the concepts described herein may be embodied as a method, data processing system, computer program product and/or computer storage media storing an executable computer program. Accordingly, the concepts described herein may take the form of an entirely hardware embodiment, an entirely software embodiment or an embodiment combining software and hardware aspects all generally referred to herein as a "circuit" or "module." Any process, step, action and/or functionality described herein may be performed by, and/or associated to, a corresponding module, which may be implemented in software and/or firmware and/or hardware. Furthermore, the disclosure may take the form of a computer program product on a tangible computer usable storage medium having computer program code embodied in the medium that can be executed by a computer. Any suitable tangible computer readable medium may be utilized including hard disks, CD-ROMs, electronic storage devices, optical storage devices, or magnetic storage devices.

Some embodiments are described herein with reference to flowchart illustrations and/or block diagrams of methods, systems and computer program products. It will be understood that each block of the flowchart illustrations and/or block diagrams, and combinations of blocks in the flowchart illustrations and/or block diagrams, can be implemented by computer program instructions. These computer program instructions may be provided to a processor of a general purpose computer (to thereby create a special purpose computer), special purpose computer, or other programmable data processing apparatus to produce a machine, such that the instructions, which execute via the processor of the computer or other programmable data processing apparatus, create means for implementing the functions/acts specified in the flowchart and/or block diagram block or blocks.

These computer program instructions may also be stored in a computer readable memory or storage medium that can direct a computer or other programmable data processing apparatus to function in a particular manner, such that the instructions stored in the computer readable memory produce an article of manufacture including instruction means which implement the function/act specified in the flowchart and/or block diagram block or blocks.

The computer program instructions may also be loaded onto a computer or other programmable data processing apparatus to cause a series of operational steps to be performed on the computer or other programmable apparatus to produce a computer implemented process such that the instructions which execute on the computer or other programmable apparatus provide steps for implementing the functions/acts specified in the flowchart and/or block diagram block or blocks.

It is to be understood that the functions/acts noted in the blocks may occur out of the order noted in the operational illustrations. For example, two blocks shown in succession may in fact be executed substantially concurrently or the blocks may sometimes be executed in the reverse order, depending upon the functionality/acts involved. Although some of the diagrams include arrows on communication paths to show a primary direction of communication, it is to be understood that communication may occur in the opposite direction to the depicted arrows.

Computer program code for carrying out operations of the concepts described herein may be written in an object oriented programming language such as Python, Java^{®} or C++. However, the computer program code for carrying out operations of the disclosure may also be written in conventional procedural programming languages, such as the "C" programming language. The program code may execute entirely on the user's computer, partly on the user's computer, as a stand-alone software package, partly on the user's computer and partly on a remote computer or entirely on the remote computer. In the latter scenario, the remote computer may be connected to the user's computer through a local area network (LAN) or a wide area network (WAN), or the connection may be made to an external computer (for example, through the Internet using an Internet Service Provider).

Abbreviations that may be used in the preceding description include:
- MCG: Master Cell Group
- SCG: Secondary Cell Group
- RLF: Radio Link Failure
- NPN: Non-Public Network
- CGI: Cell Global Identifier

## Claims

1. A method in a wireless device, WD, (22) configured to communicate with a network node (16), the WD (22) being configured with a dual connectivity, DC, configuration including one or more parameters usable by the WD (22) to communicate using a master cell group, MCG, and a secondary cell group, SCG, the WD (22) being configurable with a fast MCG link recovery configuration, the method comprising:
determining (S146) a failure of the MCG has occurred;
determining (S148) a failure of an MCG recovery procedure has occurred;
in response to determining the failure of the MCG recovery procedure has occurred:
storing (S150) information related to a reason for the failure of the MCG recovery procedure, the reason including an indication that the SCG is deactivated; and
transmitting (S152) the stored information to the network node (16).

2. The method of Claim 1, wherein:
- the method further includes determining the failure of the MCG recovery procedure has occurred after detection of a radio link failure at the MCG; and/or
- the information related to the reason for the failure of the MCG recovery procedure is transmitted by the WD (22) in an information response message.

3. The method of Claim 2, wherein the information includes an indication indicating the reason for the failure of the MCG recovery procedure, and the method further includes:
if a first timer, T316, has expired:
setting the indication to an expiry of the T316,
wherein, optionally, the method further includes: if the T316 has not expired and the SCG was deactivated at an initiation time of the MCG recovery procedure: setting the indication to SCG deactivated.

4. The method of Claim 3, wherein the method further includes:
if the SCG has failed while the T316 was running or before transmitting MCG failure information:
setting a primary secondary cell identity to a global cell identity of a primary secondary cell group, PSCell, if available, otherwise to a physical cell identity and carrier frequency of the PSCell.

5. The method of Claim 4, wherein:
- the method further includes, if the SCG has failed while the T316 was running or before transmitting MCG failure information and if a second timer, T310, expires at the SCG while the T316 was running or before transmitting the MCG failure information: setting the indication to expiry of the T310 at SCG; and/or
- the method further includes: if the WD (22) declares a radio link failure at the SCG due to a random access problem indication from SCG Medium Access Control, MAC, while the T316 was running or before transmitting the MCG failure information: setting the indication to SCG random access problem; and/or
- the method further includes: if the WD (22) declares a radio link failure at the SCG due to reaching a maximum number of retransmissions from an MCG radio link control, RLC, while the T316 was running or before transmitting the MCG failure information: setting the indication to SCG RLC maximum number of retries.

6. The method of any one of Claims 3 to 5, wherein the method further includes:
transmitting a radio link failure report including a plurality of fields, one field of the plurality of fields including the indication.

7. A wireless device, WD, (22) configured to communicate with a network node (16), the WD (22) being configured with a dual connectivity, DC, configuration including one or more parameters usable by the WD (22) to communicate using a master cell group, MCG, and a secondary cell group, SCG, the WD (22) being configurable with a fast MCG link recovery configuration, the WD (22) being configured to perform the method according to any one of claims 1 to 6.

8. A method in a network node (16) configured to communicate with a wireless device, WD, (22), the WD (22) being configured with a dual connectivity, DC, configuration including one or more parameters usable by the WD (22) to communicate using a master cell group, MCG, and a secondary cell group, SCG, the WD (22) being configurable with a fast MCG link recovery configuration, the method comprising:
receiving (S154), from the WD (22), information related to a reason for a failure of an MCG recovery procedure, the reason including an indication that the SCG is deactivated, the MCG recovery procedure being associated with a failure of the MCG; and
performing (S156) one or more actions based on the information.

9. The method of Claim 8, wherein:
- the failure of the MCG recovery procedure occurs after a radio link failure at the MCG; and/or
- performing one or more actions includes: optimizing a SCG configuration;
determining whether to deactivate or configure the SCG; and determining whether to configure the WD (22) for fast MCG link recovery.

10. The method of Claim 9, wherein the information includes an indication indicating the reason for the failure of the MCG recovery procedure, and if a first timer, T316, has expired, the indication is set to an expiry of the T316,
wherein, optionally, if the T316 has not expired and the SCG was deactivated at an initiation time of the MCG recovery procedure, the indication is set to SCG deactivated.

11. The method of Claim 10, wherein if the SCG has failed while the T316 was running or before transmitting MCG failure information, a primary secondary cell identity is set to a global cell identity of a primary secondary cell group, PSCell, if available, otherwise to a physical cell identity and carrier frequency of the PSCell.

12. The method of Claim 11, wherein:
- if the SCG has failed while the T316 was running or before transmitting MCG failure information and if a second timer, T310, expires at the SCG while the T316 was running or before transmitting the MCG failure information, the indication is set to expiry of the T310 at SCG; and/or
- if the WD (22) declares a radio link failure at the SCG due to a random access problem indication from SCG Medium Access Control, MAC, while the T316 was running or before transmitting the MCG failure information, the indication is set to SCG random access problem; and/or
- the if the WD (22) declares a radio link failure at the SCG due to reaching a maximum number of retransmissions from an MCG radio link control, RLC, while the T316 was running or before transmitting the MCG failure information, the indication is set to SCG RLC maximum number of retries.

13. The method of any one of Claims 10 to 12, wherein the method further includes one or both of:
receiving a radio link failure report including a plurality of fields, one field of the plurality of fields including the indication; and
receiving the information related to the reason for the failure of the MCG recovery procedure is in an information response message.

14. A network node (16) configured to communicate with a wireless device, WD, (22), the WD (22) being configured with a dual connectivity, DC, configuration including one or more parameters usable by the WD (22) to communicate using a master cell group, MCG, and a secondary cell group, SCG, the WD (22) being configurable with a fast MCG link recovery configuration, the network node (16) being configured to perform the method according to any one of claims 8 to 13.

15. A computer-readable medium (72, 88) comprising code portions which:
- when executed on a processor (70) of a network node (16), configure the processor to perform the method according to any one of claims 8 to 13; or
- when executed on a processor (86) of a wireless device (22), configure the processor to perform the method according to any one of claims 1 to 6.

## Patentansprüche

1. Verfahren in einer drahtlosen Vorrichtung, WD, (22) die dazu konfiguriert ist, mit einem Netzknoten (16) zu kommunizieren, wobei die WD (22) mit einer Konfiguration der dualen Konnektivität, DC-Konfiguration, konfiguriert ist, die einen oder mehrere Parameter beinhaltet, die durch die WD (22) dazu nutzbar sind, unter Verwendung einer Master-Zellgruppe, MCG, und einer sekundären Zellgruppe, SCG, zu kommunizieren, wobei die WD (22) mit einer schnellen MCG-Verbindungswiederherstellungskonfiguration konfigurierbar ist, wobei das Verfahren Folgendes umfasst:
Bestimmen (S146), dass ein Ausfall der MCG aufgetreten ist;
Bestimmen (S148), dass ein Ausfall einer MCG-Wiederherstellungsprozedur aufgetreten ist;
als Reaktion auf das Bestimmen, dass der Ausfall der MCG-Wiederherstellungsprozedur aufgetreten ist:
Speichern (S150) von Informationen in Bezug auf einen Grund für den Ausfall der MCG-Wiederherstellungsprozedur, wobei der Grund eine Anzeige beinhaltet, dass die SCG deaktiviert ist; und
Übertragen (S152) der gespeicherten Informationen an den Netzknoten (16).

2. Verfahren nach Anspruch 1, wobei:
- das Verfahren ferner Bestimmen, dass der Ausfall der MCG-Wiederherstellungsprozedur nach der Detektion eines Funkverbindungsausfalls an der MCG aufgetreten ist, beinhaltet; und/oder
- die Informationen in Bezug auf den Grund für den Ausfall der MCG-Wiederherstellungsprozedur durch die WD (22) in einer Informationsantwortnachricht übertragen werden.

3. Verfahren nach Anspruch 2, wobei die Informationen eine Anzeige beinhalten, die den Grund für den Ausfall der MCG-Wiederherstellungsprozedur anzeigt, und das Verfahren ferner Folgendes beinhaltet:
wenn ein erster Zeitgeber, T316, abgelaufen ist:
Einstellen der Anzeige auf einen Ablauf des T316,
wobei das Verfahren optional ferner Folgendes beinhaltet: wenn der T316 nicht abgelaufen ist und die SCG zu einer Initiationszeit der MCG-Wiederherstellungsprozedur deaktiviert war: Einstellen der Anzeige auf SCG deaktiviert.

4. Verfahren nach Anspruch 3, wobei das Verfahren ferner Folgendes beinhaltet:
wenn die SCG ausgefallen ist, während der T316 lief oder vor dem Übertragen der MCG-Ausfallinformationen:
Einstellen einer Identität der primären sekundären Zelle auf eine globale Zellidentität einer primären sekundären Zellgruppe, PSCell, sofern verfügbar, ansonsten auf eine Identität einer physikalischen Zelle und Trägerfrequenz der PSCell.

5. Verfahren nach Anspruch 4, wobei:
- das Verfahren ferner, wenn die SCG ausgefallen ist, während der T316 lief oder vor dem Übertragen der MCG-Ausfallinformationen, und wenn ein zweiter Zeitgeber, T310, an der SCG abläuft, während der T316 lief oder vor dem Übertragen der MCG-Ausfallinformationen, Folgendes beinhaltet: Einstellen der Anzeige auf Ablauf des T310 an der SCG; und/oder
- wobei das Verfahren ferner Folgendes beinhaltet: wenn die WD (22) einen Funkverbindungsausfall an der SCG aufgrund einer Direktzugriffsproblemanzeige von der SCG-Medienzugriffssteuerung, SCG-MAC, während der T316 lief oder vor dem Übertragen der MCG-Ausfallinformationen, erklärt: Einstellen der Anzeige auf SCG-Direktzugriffsproblem; und/oder
- wobei das Verfahren ferner Folgendes beinhaltet: wenn die WD (22) einen Funkverbindungsausfall an der SCG aufgrund von Erreichen einer Höchstanzahl erneuter Übertragungen von einer MCG-Funkverbindungssteuerung, MCG-RLC, während der T316 lief oder vor dem Übertragen der MCG-Ausfallinformationen, erklärt: Einstellen der Anzeige auf SCG-RLC-Höchstanzahl erneuter Versuche.

6. Verfahren nach einem der Ansprüche 3 bis 5, wobei das Verfahren ferner Folgendes beinhaltet:
Übertragen eines Funkverbindungsausfallberichts, der eine Vielzahl von Feldern beinhaltet, wobei ein Feld der Vielzahl von Feldern die Anzeige beinhaltet.

7. Drahtlose Vorrichtung, WD, (22), die dazu konfiguriert ist, mit einem Netzknoten (16) zu kommunizieren, wobei die WD (22) mit einer Konfiguration der dualen Konnektivität, DC-Konfiguration, konfiguriert ist, die einen oder mehrere Parameter beinhaltet, die durch die WD (22) dazu nutzbar sind, unter Verwendung einer Master-Zellgruppe, MCG, und einer sekundären Zellgruppe, SCG, zu kommunizieren, wobei die WD (22) mit einer schnellen MCG-Verbindungswiederherstellungskonfiguration konfigurierbar ist, wobei die WD (22) dazu konfiguriert ist, das Verfahren nach einem der Ansprüche 1 bis 6 durchzuführen.

8. Verfahren in einem Netzknoten (16), der dazu konfiguriert ist, mit einer drahtlosen Vorrichtung, WD, (22) zu kommunizieren, wobei die WD (22) mit einer Konfiguration der dualen Konnektivität, DC-Konfiguration, konfiguriert ist, die einen oder mehrere Parameter beinhaltet, die durch die WD (22) dazu nutzbar sind, unter Verwendung einer Master-Zellgruppe, MCG, und einer sekundären Zellgruppe, SCG, zu kommunizieren, wobei die WD (22) mit einer schnellen MCG-Verbindungswiederherstellungskonfiguration konfigurierbar ist, wobei das Verfahren Folgendes umfasst:
Empfangen (S154), von der WD (22), von Informationen in Bezug auf einen Grund für einen Ausfall einer MCG-Wiederherstellungsprozedur, wobei der Grund eine Anzeige beinhaltet, dass die SCG deaktiviert ist, wobei die MCG-Wiederherstellungsprozedur einem Ausfall der MCG zugeordnet ist; und
Durchführen (S156) einer oder mehrerer Aktionen basierend auf den Informationen.

9. Verfahren nach Anspruch 8, wobei:
- der Ausfall der MCG-Wiederherstellungsprozedur nach einem Funkverbindungsausfall an der MCG auftritt; und/oder
- das Durchführen einer oder mehrerer Aktionen Folgendes beinhaltet: Optimieren einer SCG-Konfiguration; Bestimmen, ob die SCG zu deaktivieren oder konfigurieren ist; und Bestimmen, ob die WD (22) für eine schnelle MCG-Verbindungswiederherstellung zu konfigurieren ist.

10. Verfahren nach Anspruch 9, wobei die Informationen eine Anzeige beinhalten, die den Grund für den Ausfall der MCG-Wiederherstellungsprozedur anzeigt, und, wenn ein erster Zeitgeber, T316, abgelaufen ist, die Anzeige auf einen Ablauf des T316 eingestellt wird,
wobei optional, wenn der T316 nicht abgelaufen ist und die SCG zu einer Initiationszeit der MCG-Wiederherstellungsprozedur deaktiviert war, die Anzeige auf SCG deaktiviert eingestellt wird.

11. Verfahren nach Anspruch 10, wobei, wenn die SCG ausgefallen ist, während der T316 lief oder vor Übertragen der MCG-Ausfallinformationen, eine Identität der primären sekundären Zelle auf eine globale Zellidentität einer primären sekundären Zellgruppe, PSCell, sofern verfügbar, ansonsten auf eine Identität einer physikalischen Zelle und Trägerfrequenz der PSCell eingestellt wird.

12. Verfahren nach Anspruch 11, wobei:
- wenn die SCG ausgefallen ist, während der T316 lief oder vor dem Übertragen der MCG-Ausfallinformationen, und wenn ein zweiter Zeitgeber, T310, an der SCG abläuft, während der T316 lief oder vor dem Übertragen der MCG-Ausfallinformationen, die Anzeige auf Ablauf des T310 an der SCG eingestellt wird; und/oder
- wenn die WD (22) einen Funkverbindungsausfall an der SCG aufgrund einer Direktzugriffsproblemanzeige von der SCG-Medienzugriffssteuerung, SCG-MAC, während der T316 lief oder vor dem Übertragen der MCG-Ausfallinformationen, erklärt, die Anzeige auf SCG-Direktzugriffsproblem eingestellt wird; und/oder
- die wenn die WD (22) einen Funkverbindungsausfall an der SCG aufgrund von Erreichen einer Höchstanzahl erneuter Übertragungen von einer MCG-Funkverbindungssteuerung, MCG-RLC, während der T316 lief oder vor dem Übertragen der MCG-Ausfallinformationen, erklärt, die Anzeige auf SCG-RLC-Höchstanzahl erneuter Versuche eingestellt wird.

13. Verfahren nach einem der Ansprüche 10 bis 12, wobei das Verfahren ferner eines oder beide des Folgenden beinhaltet:
Empfangen eines Funkverbindungsausfallberichts, der eine Vielzahl von Feldern beinhaltet, wobei ein Feld der Vielzahl von Feldern die Anzeige beinhaltet; und
Empfangen der Informationen in Bezug auf den Grund für den Ausfall der MCG-Wiederherstellungsprozedur befindet sich in einer Informationsantwortnachricht.

14. Netzknoten (16), der dazu konfiguriert ist, mit einer drahtlosen Vorrichtung, WD, (22) zu kommunizieren, wobei die WD (22) mit einer Konfiguration der dualen Konnektivität, DC-Konfiguration, konfiguriert ist, die einen oder mehrere Parameter beinhaltet, die durch die WD (22) dazu nutzbar sind, unter Verwendung einer Master-Zellgruppe, MCG, und einer sekundären Zellgruppe, SCG, zu kommunizieren, wobei die WD (22) mit einer schnellen MCG-Verbindungswiederherstellungskonfiguration konfigurierbar ist, wobei der Netzknoten (16) dazu konfiguriert ist, das Verfahren nach einem der Ansprüche 8 bis 13 durchzuführen.

15. Computerlesbares Medium (72, 88), umfassend Codeabschnitte, die:
- wenn sie auf einem Prozessor (70) eines Netzknotens (16) ausgeführt werden, den Prozessor dazu konfigurieren, das Verfahren nach einem der Ansprüche 8 bis 13 durchzuführen; oder
- wenn sie auf einem Prozessor (86) einer drahtlosen Vorrichtung (22) ausgeführt werden, den Prozessor dazu konfigurieren, das Verfahren nach einem der Ansprüche 1 bis 6 durchzuführen; oder

## Revendications

1. Procédé dans un dispositif sans fil, WD, (22) configuré pour communiquer avec un nœud de réseau (16), le WD (22) étant configuré avec une configuration de double connectivité, DC, comprenant un ou plusieurs paramètres utilisables par le WD (22) pour communiquer en utilisant un groupe de cellules de maître, MCG, et un groupe de cellules secondaires, SCG, le WD (22) pouvant être configuré avec une configuration de récupération de liaison de MCG rapide, le procédé comprenant :
la détermination (S146) qu'une défaillance du MCG est survenue ;
la détermination (S148) qu'une défaillance d'une procédure de récupération de MCG est survenue ;
en réponse à la détermination que la défaillance de la procédure de récupération de MCG est survenue :
le stockage (S150) d'informations relatives à une raison de la défaillance de la procédure de récupération de MCG, la raison comprenant une indication que le SCG est désactivé ; et
la transmission (S152) des informations stockées au nœud de réseau (16).

2. Procédé selon la revendication 1, dans lequel :
- le procédé comprend en outre la détermination que la défaillance de la procédure de récupération de MCG est survenue après la détection d'une défaillance de liaison radio au niveau du MCG ; et/ou
- les informations relatives à la raison de la défaillance de la procédure de récupération de MCG sont transmises par le WD (22) dans un message de réponse d'informations.

3. Procédé selon la revendication 2, dans lequel les informations comprennent une indication indiquant la raison de la défaillance de la procédure de récupération de MCG, et le procédé comprend en outre :
si un premier temporisateur, T316, a expiré :
le réglage de l'indication sur une expiration du T316,
dans lequel, éventuellement, le procédé comprend en outre : si le T316 n'a pas expiré et que le SCG était désactivé à un moment d'initiation de la procédure de récupération de MCG : le réglage de l'indication sur SCG désactivé.

4. Procédé selon la revendication 3, dans lequel le procédé comprend en outre :
si le SCG a échoué pendant que le T316 était en cours d'exécution ou avant la transmission d'informations de défaillance de MCG :
le réglage d'une identité de cellule secondaire primaire sur une identité de cellule globale d'un groupe de cellules secondaires primaires, PSCell, si elle est disponible, sinon sur une identité de cellule physique et une fréquence porteuse de la PSCell.

5. Procédé selon la revendication 4, dans lequel :
- le procédé comprend en outre, si le SCG a échoué pendant que le T316 était en cours d'exécution ou avant la transmission d'informations de défaillance de MCG et si un second temporisateur, T310, expire au niveau du SCG pendant que le T316 était en cours d'exécution ou avant la transmission des informations de défaillance de MCG : le réglage de l'indication sur l'expiration du T310 au niveau du SCG ; et/ou
- le procédé comprend en outre : si le WD (22) déclare une défaillance de liaison radio au niveau du SCG en raison d'une indication de problème d'accès aléatoire provenant d'une commande d'accès au support, MAC, de SCG, pendant que le T316 était en cours d'exécution ou avant la transmission des informations de défaillance de MCG : le réglage de l'indication sur problème d'accès aléatoire de SCG ; et/ou
- le procédé comprend en outre : si le WD (22) déclare une défaillance de liaison radio au niveau du SCG en raison de l'atteinte d'un nombre maximal de retransmissions provenant d'une commande de liaison radio, RLC, de MCG, pendant que le T316 était en cours d'exécution ou avant la transmission des informations de défaillance de MCG : le réglage de l'indication sur nombre maximal de tentatives de RLC de SCG.

6. Procédé selon l'une quelconque des revendications 3 à 5, dans lequel le procédé comprend en outre :
la transmission d'un rapport de défaillance de liaison radio comprenant une pluralité de champs, un champ de la pluralité de champs comprenant l'indication.

7. Dispositif sans fil, WD, (22) configuré pour communiquer avec un nœud de réseau (16), le WD (22) étant configuré avec une configuration de double connectivité, DC, comprenant un ou plusieurs paramètres utilisables par le WD (22) pour communiquer en utilisant un groupe de cellules de maître, MCG, et un groupe de cellules secondaires, SCG, le WD (22) pouvant être configuré avec une configuration de récupération de liaison de MCG rapide, le WD (22) étant configuré pour réaliser le procédé selon l'une quelconque des revendications 1 à 6.

8. Procédé dans un nœud de réseau (16) configuré pour communiquer avec un dispositif sans fil, WD, (22), le WD (22) étant configuré avec une configuration de double connectivité, DC, comprenant un ou plusieurs paramètres utilisables par le WD (22) pour communiquer en utilisant un groupe de cellules de maître, MCG, et un groupe de cellules secondaires, SCG, le WD (22) pouvant être configuré avec une configuration de récupération de liaison de MCG rapide, le procédé comprenant :
la réception (S154), provenant du WD (22), d'informations relatives à une raison d'une défaillance d'une procédure de récupération de MCG, la raison comprenant une indication que le SCG est désactivé, la procédure de récupération de MCG étant associée à une défaillance du MCG ; et
la réalisation (S156) d'une ou plusieurs actions sur la base des informations.

9. Procédé selon la revendication 8, dans lequel :
- la défaillance de la procédure de récupération de MCG survient après une défaillance de liaison radio au niveau du MCG ; et/ou
- la réalisation d'une ou plusieurs actions comprend : l'optimisation d'une configuration de SCG ; la détermination du fait de désactiver ou de configurer le SCG ; et la détermination du fait de configurer le WD (22) pour une récupération de liaison de MCG rapide.

10. Procédé selon la revendication 9, dans lequel les informations comprennent une indication indiquant la raison de la défaillance de la procédure de récupération de MCG, et si un premier temporisateur, T316, a expiré, l'indication est réglée sur une expiration du T316,
dans lequel, éventuellement, si le T316 n'a pas expiré et que le SCG était désactivé à un moment d'initiation de la procédure de récupération de MCG, l'indication est réglée sur SCG désactivé.

11. Procédé selon la revendication 10, dans lequel si le SCG a échoué pendant que le T316 était en cours d'exécution ou avant la transmission d'informations de défaillance de MCG, une identité de cellule secondaire primaire est réglée sur une identité de cellule globale d'un groupe de cellules secondaires primaires, PSCell, si elle est disponible, sinon sur une identité de cellule physique et une fréquence porteuse de la PSCell.

12. Procédé selon la revendication 11, dans lequel :
- si le SCG a échoué pendant que le T316 était en cours d'exécution ou avant la transmission d'informations de défaillance de MCG et si un second temporisateur, T310, expire au niveau du SCG pendant que le T316 était en cours d'exécution ou avant la transmission des informations de défaillance de MCG, l'indication est réglée sur l'expiration du T310 au niveau du SCG ; et/ou
- si le WD (22) déclare une défaillance de liaison radio au niveau du SCG en raison d'une indication de problème d'accès aléatoire provenant d'une commande d'accès au support, MAC, de SCG, pendant que le T316 était en cours d'exécution ou avant la transmission des informations de défaillance de MCG, l'indication est réglée sur problème d'accès aléatoire de SCG ; et/ou
- si le WD (22) déclare une défaillance de liaison radio au niveau du SCG en raison de l'atteinte d'un nombre maximal de retransmissions provenant d'une commande de liaison radio, RLC, de MCG, pendant que le T316 était en cours d'exécution ou avant la transmission des informations de défaillance de MCG, l'indication est réglée sur nombre maximal de tentatives de RLC de SCG.

13. Procédé selon l'une quelconque des revendications 10 à 12, dans lequel le procédé comprend en outre l'un ou les deux parmi :
la réception d'un rapport de défaillance de liaison radio comprenant une pluralité de champs, un champ de la pluralité de champs comprenant l'indication ; et
la réception des informations relatives à la raison de la défaillance de la procédure de récupération de MCG se faisant dans un message de réponse d'informations.

14. Nœud de réseau (16) configuré pour communiquer avec un dispositif sans fil, WD, (22), le WD (22) étant configuré avec une configuration de double connectivité, DC, comprenant un ou plusieurs paramètres utilisables par le WD (22) pour communiquer en utilisant un groupe de cellules de maître, MCG, et un groupe de cellules secondaires, SCG, le WD (22) pouvant être configuré avec une configuration de récupération de liaison de MCG rapide, le nœud de réseau (16) étant configuré pour réaliser le procédé selon l'une quelconque des revendications 8 à 13.

15. Support lisible par ordinateur (72, 88) comprenant des parties de code qui :
- lorsqu'elles sont exécutées sur un processeur (70) d'un nœud de réseau (16), configurent le processeur pour réaliser le procédé selon l'une quelconque des revendications 8 à 13 ; ou
- lorsqu'elles sont exécutées sur un processeur (86) d'un dispositif sans fil (22), configurent le processeur pour réaliser le procédé selon l'une quelconque des revendications 1 à 6.
